(19) Europäisches Patentamt
European Patent Office
Office européen des brevets

(11) **EP 4 764 478 A1**

(12) **EUROPEAN PATENT APPLICATION**
published in accordance with Art. 153(4) EPC

(43) Date of publication:
**24.06.2026 Bulletin 2026/26**

(21) Application number: **24853018.0**

(22) Date of filing: **14.03.2024**

(51) International Patent Classification (IPC):
***G01N 23/223*** (2006.01)   ***G01N 23/2273*** (2018.01)

(52) Cooperative Patent Classification (CPC):
**G01N 23/223; G01N 23/2273**

(86) International application number:
**PCT/JP2024/010096**

(87) International publication number:
**WO 2025/037449 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.08.2023   JP 2023132504**

(71) Applicant: **Sumitomo Electric Industries, Ltd.
Osaka-shi, Osaka 541-0041 (JP)**

(72) Inventor: **HOSHINA, Yutaka
Osaka-shi, Osaka 541-0041 (JP)**

(74) Representative: **Grünecker Patent- und
Rechtsanwälte
PartG mbB
Leopoldstraße 4
80802 München (DE)**

(54) **DATA ANALYSIS DEVICE, DATA ANALYSIS METHOD, PROGRAM, AND RECORDING MEDIUM**

(57)    A data analysis apparatus in the present disclosure is a data analysis apparatus that analyzes a depth profile of a sample by using data of a response signal generated from the sample as a result of incidence of a probe, and includes an input unit that receives the data of the response signal, the data being obtained by a measurement apparatus that measures the response signal by varying a condition of incidence of the probe so as to evaluate different depth areas of the sample, an analysis unit that estimates a relative concentration for each depth from a surface of the sample and for each chemical species by analyzing the data of the response signal so as to calculate an average value and a confidence interval of estimated values of the relative concentration, and an output unit that outputs representation of the average value and the confidence interval of the estimated values of the relative concentration.

FIG.3

**Description**

TECHNICAL FIELD

The present disclosure relates to a data analysis apparatus, a data analysis method, a program, and a recording medium. The present application claims priority to Japanese Patent Application No. 2023-132504 filed on August 16, 2023, the entire contents of which are hereby incorporated by reference.

BACKGROUND ART

In discussing characteristics or defects of various products, there are many scenes where it is extremely important to know a state of the vicinity of a surface of a sample. In such discussions, in particular, a "depth profile" which represents how a chemical species included in a sample is distributed in a depth direction is often evaluated.

Techniques to evaluate the depth profile include, for example, scanning transmission electron microscope (STEM) energy dispersive X-ray spectroscopy (EDX) or X-ray photoelectron spectroscopy (XPS). With these techniques, however, in evaluation of the depth profile of the sample, the state of the sample may vary. For example, in analysis with STEM-EDX, prior to the analysis, pre-treatment for thin sectioning of the sample is required. In analysis with XPS, on the other hand, an information depth at which evaluation can typically be performed is approximately several nanometers from the surface, although it depends on a measurement condition. Therefore, in order to evaluate a deeper area of the sample with XPS, the surface of the sample should be etched by ion sputtering. Ion sputtering, however, may damage the surface of the sample.

A method of estimating the depth profile of the sample by using a response signal generated from the sample as a result of incidence of a probe on the sample has been proposed as a method that allows nondestructive evaluation of the depth profile of the sample. For example, "Application of Maximum Entropy Method to Semiconductor Engineering," Yoshiki Yonamoto, Entropy 2013, 15, 1663-1689; doi: 10.3390/e15051663 (NPL 1) discloses an analysis technique to apply a maximum entropy method (MEM) to data obtained from angle resolved XPS (ARXPS) without sputtering. WO2022/230112 (PTL 1) describes a maximum smoothness method (MSM) which is a recently developed analysis technique.

CITATION LIST

PATENT LITERATURE

PTL 1: WO2022/230112

NON PATENT LITERATURE

NPL 1: "Application of Maximum Entropy Method to Semiconductor Engineering," Yoshiki Yonamoto, Entropy 2013, 15, 1663-1689; doi: 10.3390/e15051663

SUMMARY OF INVENTION

A data analysis apparatus according to one aspect of the present disclosure is a data analysis apparatus that analyzes a depth profile of a sample by using data of a response signal generated from the sample as a result of incidence of a probe. The data analysis apparatus includes an input unit that receives the data of the response signal, the data being obtained by a measurement apparatus that measures the response signal by varying a condition of incidence of the probe so as to evaluate different depth areas of the sample, an analysis unit that estimates a relative concentration for each depth from a surface of the sample and for each chemical species by analyzing the data of the response signal so as to calculate an average value and a confidence interval of estimated values of the relative concentration, and an output unit that outputs representation of the average value and the confidence interval of the estimated values of the relative concentration.

BRIEF DESCRIPTION OF DRAWINGS

[Fig. 1] Fig. 1 is a diagram showing an analysis system including an analysis apparatus according to an embodiment of the present disclosure.

[Fig. 2] Fig. 2 is a block diagram showing an exemplary hardware configuration of a data analysis apparatus according to the embodiment of the present disclosure.

[Fig. 3] Fig. 3 is a diagram showing an exemplary functional block of the data analysis apparatus shown in Fig. 2.

[Fig. 4] Fig. 4 is a schematic diagram showing a response signal generated as a result of incidence of a probe on a sample.

[Fig. 5] Fig. 5 is a diagram showing an exemplary result of analysis in EDX measurement by conventional MSM.

[Fig. 6] Fig. 6 is a schematic diagram representing a distribution of a relative concentration of each chemical species and accuracy of the result of analysis.

[Fig. 7] Fig. 7 is a flowchart showing an exemplary flow of processing in a data analysis method (Bayesian MSM) performed by the data analysis apparatus according to a first embodiment.

[Fig. 8] Fig. 8 is a flowchart showing another exemplary flow of processing in the data analysis method (Bayesian MSM) performed by the data analysis apparatus according to the first embodiment.

[Fig. 9] Fig. 9 is a flowchart showing an exemplary flow of processing in Bayesian MSM to which a sampling method is applied, the processing being performed by an analysis unit.

[Fig. 10] Fig. 10 is a diagram showing a structure of a model sample used in verification of the result of analysis by Bayesian MSM.

[Fig. 11] Fig. 11 is a diagram showing an exemplary result of analysis of the model shown in Fig. 10, by Bayesian MSM using a sampling method (Metropolis method).

[Fig. 12] Fig. 12 is a diagram showing representative three locations in a depth profile shown in Fig. 11.

[Fig. 13] Fig. 13 is a diagram showing a trace plot of values of the relative concentration at the three locations in the depth profile shown in Fig. 12.

[Fig. 14] Fig. 14 is a diagram showing an exemplary result of analysis of the model shown in Fig. 10, by Bayesian MSM using variational inference.

[Fig. 15] Fig. 15 is a model diagram of a sample to which Bayesian estimation according to a second embodiment is applied.

[Fig. 16] Fig. 16 is a diagram that schematically expresses a sigmoid function type depth profile.

[Fig. 17] Fig. 17 is a functional block diagram showing an example in which the analysis unit shown in Fig. 3 is configured according to the second embodiment.

[Fig. 18] Fig. 18 is a block diagram showing an exemplary configuration of a direct problem evaluator and a next parameter recommendation unit shown in Fig. 17.

[Fig. 19] Fig. 19 is a diagram showing a STEM cross-sectional image of a sample 1.

[Fig. 20] Fig. 20 is a diagram showing a result of EDX surface analysis of sample 1.

[Fig. 21] Fig. 21 is a diagram showing an analysis model (an Ni layer on an InP substrate) of sample 1.

[Fig. 22] Fig. 22 is a diagram showing a result of calculation by the analysis unit, of a thickness of the Ni layer and an In composition of InP according to an MCMC method.

[Fig. 23] Fig. 23 is a diagram showing a result of analysis of sample 1 (the Ni layer on the InP substrate) by the analysis unit.

[Fig. 24] Fig. 24 is a diagram showing an analysis model (an SiN layer on the InP substrate) of sample 1.

[Fig. 25] Fig. 25 is a diagram showing a result of calculation by the analysis unit, of an N composition in the SiN layer, a thickness of the SiN layer, and the In composition in an InP layer according to the MCMC method.

[Fig. 26] Fig. 26 is a diagram showing a result of analysis of sample 1 (the SiN layer on the InP substrate) by the analysis unit.

[Fig. 27] Fig. 27 is a diagram showing a STEM cross-sectional image of a sample 2.

[Fig. 28] Fig. 28 is a diagram showing a result of cross-section analysis of sample 2 by STEM-EDX.

[Fig. 29] Fig. 29 is a diagram showing an analysis model of sample 2.

[Fig. 30] Fig. 30 is a diagram showing a result of calculation by the analysis unit, of a carbon composition in a PFA layer and a thickness of the PFA layer according to the MCMC method.

[Fig. 31] Fig. 31 is a diagram showing a result of analysis of sample 2 by the analysis unit.

[Fig. 32] Fig. 32 is a diagram showing a STEM cross-sectional image of a sample 3.

[Fig. 33] Fig. 33 is a diagram showing a result of EDX surface analysis of sample 3.

[Fig. 34] Fig. 34 is a diagram showing a result of calculation by the analysis unit, of a thickness of a multilayer film of sample 3 according to the MCMC method.

[Fig. 35] Fig. 35 is a diagram showing a result of profile evaluation of sample 3 by an analysis unit 52.

[Fig. 36] Fig. 36 is a diagram showing a result of calculation by the analysis unit, of the thickness of the multilayer film of sample 3 according to the MCMC method when the number of pieces of EDX measurement data is decreased.

[Fig. 37] Fig. 37 is a diagram showing influence by the number of pieces of measurement data on estimation of a film thickness of sample 3 by the MCMC method.

[Fig. 38] Fig. 38 is a diagram showing a first example of output of representation by the data analysis apparatus according to the present embodiment.

[Fig. 39] Fig. 39 is a diagram showing a second example of output of representation by the data analysis apparatus according to the present embodiment.

[Fig. 40] Fig. 40 is a diagram showing a third example of output of representation by the data analysis apparatus according to the present embodiment.

[Fig. 41] Fig. 41 is a diagram showing a fourth example of output of representation by the data analysis apparatus according to the present embodiment.

[Fig. 42] Fig. 42 is a diagram showing a fifth example of output of representation by the data analysis apparatus according to the present embodiment.

DETAILED DESCRIPTION

[Problem to be Solved by the Present Disclosure]

In MEM or MSM, a depth profile of a sample is estimated and a result of that estimation is outputted. Conventionally, an analyst has been unable to know accuracy of the result of estimation. Since MEM or MSM is a "method of evaluating" a profile, it should essentially output some kind of accuracy, similarly to other various analysis methods. From a point of view of prevention of erroneous evaluation by the analyst, the analyst is desirably able to grasp the accuracy of the result of estimation.

Therefore, an object of the present disclosure is to enable representation of accuracy of a result of estimation in an analysis technique to estimate a depth profile of a sample based on a response signal generated from the sample as a result of incidence of a probe.

[Advantageous Effect of the Present Disclosure]

According to the present disclosure, in the analysis technique to estimate the depth profile of the sample based on the response signal generated from the sample as a result of incidence of the probe, accuracy of the result of estimation can be shown.

[Description of Embodiments of the Present Disclosure]

Embodiments of the present disclosure will initially be listed and described.

(1) A data analysis apparatus according to one embodiment of the present disclosure is a data analysis apparatus that analyzes a depth profile of a sample by using data of a response signal generated from the sample as a result of incidence of a probe. The data analysis apparatus includes an input unit that receives the data of the response signal, the data being obtained by a measurement apparatus that measures the response signal by varying a condition of incidence of the probe so as to evaluate different depth areas of the sample, an analysis unit that estimates a relative concentration for each depth from a surface of the sample and for each chemical species by analyzing the data of the response signal so as to calculate an average value and a confidence interval of estimated values of the relative concentration, and an output unit that outputs representation of the average value and the confidence interval of the estimated values of the relative concentration.

According to this configuration, in an analysis technique to estimate the depth profile of the sample based on the response signal generated from the sample as a result of incidence of the probe, accuracy of the result of estimation can be shown. An analyst (for example, a user of the data analysis apparatus) can grasp accuracy of the result of estimation by representation of the average value and the confidence interval. "Output of representation" means output of the result of analysis in a form recognizable by the user. Therefore, "output of representation" includes showing the depth profile which is the result of analysis and the accuracy thereof on a screen of a display, in a form of a graph, numerical data, a table, or the like. The depth profile which is the result of analysis and the accuracy thereof may be outputted on paper in a form of a graph, numerical data, a table, or the like, Alternatively, for example, a sequence of numbers representing the result of analysis may once be outputted to (stored in) a storage device or a storage medium. In the embodiment of the present disclosure, output of the result of analysis in such a manner as being shown in a subsequent stage is also encompassed in "output of representation."

(2) In the data analysis apparatus described in (1), the representation of the average value and the confidence interval is representation in a form of a graph, and the graph includes a first axis representing the depth, a second axis representing the relative concentration, a first graphic representing variation of the average value with respect to the depth, and a second graphic representing variation of the confidence interval with respect to the depth.

According to this configuration, accuracy of the result of estimation can be shown in a form readily graspable by the analyst. The "graphic" includes, for example, a point, a line, a face, and a solid. A type of the graphic is not particularly limited.

(3) In the data analysis apparatus described in (2), the first graphic is a curve and the second graphic includes an area superimposed on the curve.

According to this configuration, since a width of the area corresponds to a width of the confidence interval, accuracy of the result of estimation can be shown to allow the analyst to readily grasp accuracy of the result of estimation.

(4) In the data analysis apparatus described in (2), the second graphic includes a first curve representing an upper limit of the confidence interval and a second curve representing a lower limit of the confidence interval.

According to this configuration, since the first curve and the second curve express the confidence interval, accuracy of the result of estimation can be shown to allow the analyst to readily grasp accuracy of the result of estimation.

(5) In the data analysis apparatus described in any of (2) to (4), the second graphic includes an error bar, and a length of the error bar corresponds to a width of the confidence interval of the estimated values at a designated position on the first graphic.

According to this configuration, since the length of the error bar expresses the width of the confidence interval, accuracy of the result of estimation can be shown to allow the analyst to readily grasp accuracy of the result of estimation.

(6) In the data analysis apparatus described in any of (2) to (5), the graph includes numerical representation of at least one of the average value, an upper limit value of the confidence interval, and a lower limit value of the confidence interval, at a designated position on the first graphic.

According to this configuration, at least one of the average value, the upper limit value of the confidence interval, and the lower limit value of the confidence interval is shown as a numerical value to allow the analyst to readily grasp the result of estimation.

(7) In the data analysis apparatus described in any of (1) to (6), the output unit outputs the representation of the average value and the confidence interval in a form of a table of figures.

According to this configuration, as the average value and the confidence interval are shown as numerical values, the analyst can specifically grasp the average value and the confidence interval. Representation in a form of a table of figures may be outputted alone or together with representation of a graph.

(8) In the data analysis apparatus described in any of (2) to (7), the analysis unit calculates the average value and the confidence interval of the estimated values by processing an evaluation function in accordance with Bayesian estimation processing, and the evaluation function is expressed by a sum of a first term and a second term, the first term expressing a sum of squared deviation between a theoretical value of the response signal and the data of the response signal when the sample is modeled to a multilayer structure composed of a plurality of layers, the second term expressing a degree of continuity of the relative concentration at the depth.

According to this configuration, the analysis unit performs MSM based on a concept of Bayesian estimation. In MSM, the evaluation function expressed by the sum of the first term that expresses the sum of squared deviation between the theoretical value of the response signal when the sample is modeled to the multilayer structure composed of the plurality of layers and the measurement data and the second term that expresses the degree of continuity at the depth of the relative concentration is processed. Each point on the depth profile expressed by this evaluation function essentially has the concept corresponding to an average ($\mu$) and a variance ($\sigma$). With conventional MSM, the average ($\mu$) and the variance ($\sigma$) could not be shown. By application of the Bayesian estimation processing in minimization of the evaluation function, representation of the average value and the confidence interval of the estimated values can be realized.

(9) In the data analysis apparatus described in (8), the Bayesian estimation processing includes a sampling algorithm with the relative concentration for each depth and for each chemical species being defined as a variable.

According to this configuration, since a probability a posteriori distribution in Bayesian estimation can be obtained, the average value and the variance of the estimated values can be obtained.

(10) In the data analysis apparatus described in (8), the Bayesian estimation processing is processing in accordance with a variational inference method.

According to this configuration, since a probability a posteriori distribution in Bayesian estimation can be obtained, the average value and the variance of the estimated values can be obtained.

(11) In the data analysis apparatus described in any of (2) to (7), the analysis unit calculates the average value and the confidence interval of the estimated values of the relative concentration by obtaining, in accordance with Bayesian estimation, a posterior distribution of a parameter included in a prescribed function that expresses a model of the sample in which a degree of freedom of the depth profile is restricted.

According to this configuration, as the premise of analysis of the depth profile, the degree of freedom of the depth profile is restricted. An analysis method easier for the user to use can thus be realized. For example, in calculation by the analysis unit, of the average value and the confidence interval of the relative concentration from the probability distribution of the parameter, a calculation time period required for the calculated value to reach a reasonable value can be made shorter. In addition, with already-known elements in the profile being incorporated, analysis exclusive to an unknown portion can be conducted.

(12) In the data analysis apparatus described in (11), the model of the sample is a multilayer structure composed of a plurality of layers. The prescribed function is a function that expresses that the depth profile has rise and fall at a boundary of each layer of the plurality of layers. The parameter includes a composition of the sample, a thickness of each layer of the plurality of layers, gentleness of the rise of the depth profile of each layer of the plurality of layers, and gentleness of the fall of the depth profile of each layer of the plurality of layers.

According to this configuration, in estimation of the depth profile of the relative concentration of the chemical species, the degree of freedom of the depth profile can be restricted. Furthermore, an appropriate parameter can be selected from among the parameters above, in accordance with a problem to be solved.

(13) In the data analysis apparatus described in (12), the analysis unit includes a direct problem evaluator that calculates a sum of squared deviation of an actually measured value and a theoretical value by using a value of the parameter as input to a direct problem model and a next parameter recommendation unit that recommends to the direct problem evaluator, a candidate value for the parameter to be used for next calculation by the direct problem evaluator, by using the sum of squared deviation calculated by the direct problem evaluator. Calculation of the sum of squared deviation by the direct problem evaluator and recommendation of the candidate value for the parameter by the next parameter recommendation unit are alternately iterated.

According to this configuration, calculation (evaluation of a direct problem) by the direct problem evaluator, of the sum of squared deviation of the actually measured value and the theoretical value and recommendation of the candidate value for the parameter by the next parameter recommendation unit are alternately iterated. The average value and the confidence interval of the estimated values of the parameter can thus be calculated. Furthermore, the next parameter recommendation unit can recommend the next parameter based on the posterior distribution calculated by the direct problem evaluator and the previous parameter without being dependent on contents of the direct problem evaluator. By changing the direct problem to be solved by the direct problem evaluator depending on the type of surface analysis, the data analysis apparatus adapted to that surface analysis can be configured. In other words, the analysis technique according to the present embodiment can be applied to each and every surface analysis, without an analysis technique being particularly limited.

(14) In the data analysis apparatus described in (13), the next parameter recommendation unit includes an MCMC implementation unit that proposes the candidate value for the parameter using a prescribed probability distribution in accordance with a Markov chain Monte Carlo method and an optimal solution determination unit that calculates an initial value for the Markov chain Monte Carlo method performed by the MCMC implementation unit, by performing a prescribed optimization technique using the sum of squared deviation calculated by the direct problem evaluator.

According to this configuration, the optimal solution determination unit can obtain a parameter target value or a value in the vicinity of the target value. The value obtained by the optimal solution determination unit is used as the initial value in the Markov chain Monte Carlo (MCMC) method. The MCMC implementation unit can shorten a burn-in period by using the initial value. Therefore, the calculation time period until reaching a solution distribution in the MCMC implementation unit can be made shorter.

(15) In the data analysis apparatus described in any of (1) to (14), the measurement apparatus is an energy dispersive X-ray spectrometer.

According to this configuration, the average value and the variance of the estimated values of the depth profile of the sample can be obtained from the response signal from the energy dispersive X-ray spectrometer. The "energy dispersive X-ray spectrometer" should only be an apparatus to analyze characteristic X-rays generated from the sample by the probe inputted to the sample. By way of example of the "energy dispersive X-ray spectrometer," an apparatus that conducts "analysis by observation of characteristic X-rays by emission of electron beams" (what is called "EDX" analysis) can be exemplified. An apparatus that conducts "analysis by observation of characteristic X-rays by emission of X-ray beams" (fluorescence X-ray analysis) can be exemplified as another example of the "energy dispersive X-ray spectrometer. "

(16) In the data analysis apparatus described in any of (1) to (14), the measurement apparatus is an X-ray photoelectron spectrometer.

According to this configuration, the average value and the variance of the estimated values of the depth profile of the sample can be obtained from the response signal from the X-ray photoelectron spectrometer (XPS).

(17) A data analysis method according to one embodiment of the present disclosure is a data analysis method of analyzing a depth profile of a sample by using data of a response signal generated from the sample as a result of incidence of a probe. The data analysis method includes receiving, by a data analysis apparatus, the data of the response signal, the data being obtained by a measurement apparatus that measures the response signal by varying a condition of incidence of the probe so as to evaluate different depth areas of the sample, estimating, by the data analysis apparatus, a relative concentration for each depth from a surface of the sample and for each chemical species by analyzing the data of the response signal so as to calculate an average value and a confidence interval of estimated values of the relative concentration, and outputting, by the data analysis apparatus, representation of the average value and the confidence interval of the estimated values of the relative concentration.

According to this configuration, in an analysis technique to estimate the depth profile of the sample based on the response signal generated from the sample as a result of incidence of the probe, accuracy of the result of estimation can be shown. An analyst (for example, a user of the data analysis apparatus) can grasp accuracy of the result of estimation by representation of the average value and the confidence interval.

(18) A program according to one embodiment of the present disclosure causes a computer to perform obtaining data of a response signal, the data being obtained by a measurement apparatus that measures the response signal by varying a condition of incidence of a probe so as to evaluate different depth areas of a sample, estimating a relative concentration for each depth from a surface of the sample and for each chemical species by analyzing the data of the response signal so as to calculate an average value and a confidence interval of estimated values of the relative concentration, and outputting representation of the average value and the confidence interval of the estimated values of the relative concentration.

According to this configuration, in an analysis technique to estimate the depth profile of the sample based on the response signal generated from the sample as a result of incidence of the probe, accuracy of the result of estimation can be shown. An analyst (for example, a user of a data analysis apparatus) can grasp accuracy of the result of estimation by representation of the average value and the confidence interval.

(19) A recording medium according to one embodiment of the present disclosure has a program recorded thereon, and the program causes a computer to perform obtaining data of a response signal, the data being obtained by a measurement apparatus that measures the response signal by varying a condition of incidence of a probe so as to evaluate different depth areas of a sample, estimating a relative concentration for each depth from a surface of the sample and for each chemical species by analyzing the data of the response signal so as to calculate an average value and a confidence interval of estimated values of the relative concentration, and outputting representation of the average value and the confidence interval of the estimated values of the relative concentration.

According to this configuration, in an analysis technique to estimate the depth profile of the sample based on the response signal generated from the sample as a result of incidence of the probe, accuracy of the result of estimation can be shown. An analyst (for example, a user of a data analysis apparatus) can grasp accuracy of the result of estimation by representation of the average value and the confidence interval.

[Details of Embodiments of the Present Disclosure]

An embodiment of the present disclosure will be described below with reference to the drawings. The same or corresponding elements in the drawings have the same reference characters allotted and description thereof will not be repeated.

<1. Configuration of Analysis System and Analysis Apparatus>

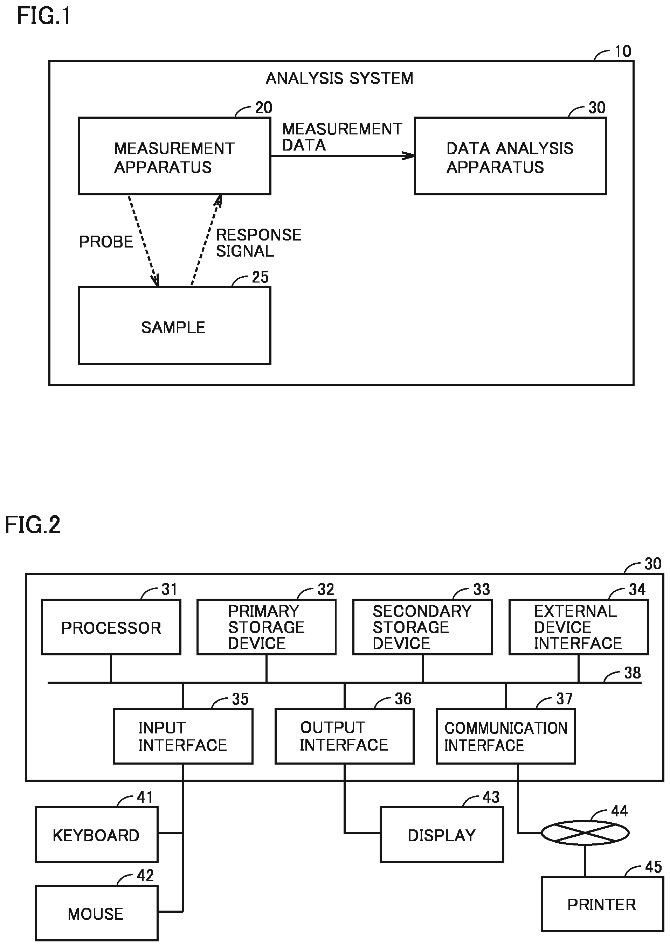

Fig. 1 is a diagram showing an analysis system including an analysis apparatus according to the embodiment of the present disclosure. As shown in Fig. 1, an analysis system 10 includes a measurement apparatus 20 and a data analysis apparatus 30.

In the embodiment of the present disclosure, measurement apparatus 20 measures intensity of a response signal generated from a sample 25 by causing a probe such as X-rays or electron beams to be incident on sample 25. Measurement apparatus 20 can vary a condition of incidence of the probe on sample 25 so as to evaluate different depth areas of sample 25.

The embodiment of the present disclosure is applicable to each and every surface analysis, without a type of measurement apparatus 20 being limited. Measurement apparatus 20 should only be an apparatus that measures intensity of the response signal generated from sample 25 by causing the probe to be incident on sample 25. In one embodiment, measurement apparatus 20 is an energy dispersive X-ray fluorescence (EDX) spectrometer, although it is not particularly limited. Measurement apparatus 20 may be, for example, an angle-resolved X-ray photoelectron spectroscopic (for example, ARXPS) apparatus or an X-ray fluorescence (XRF) spectrometer.

Data analysis apparatus 30 is implemented by hardware in accordance with a general-purpose computing architecture. Data analysis apparatus 30 obtains the response signal, that is, measurement data, from measurement apparatus 20. Data analysis apparatus 30 analyzes the depth profile of sample 25 based on the measurement data. Specifically, data analysis apparatus 30 estimates a relative concentration for each depth and for each chemical species of sample 25 by analyzing the measurement data. Data analysis apparatus 30 outputs representation of an average value of estimated values of the relative concentration for each depth and for each chemical species of sample 25 and a confidence interval of the estimated values. Data analysis apparatus 30 can thus show to a user (not-shown) of data analysis apparatus 30, accuracy of a result of estimation of the depth profile for each chemical species. An analyst (that is, the user of the data analysis apparatus) can grasp the accuracy of the result of estimation by representation of the average value and the confidence interval.

Fig. 2 is a block diagram showing an exemplary hardware configuration of the data analysis apparatus according to the embodiment of the present disclosure. As shown in Fig. 2, data analysis apparatus 30 includes a processor 31, a primary storage device 32, a secondary storage device 33, an external device interface 34, an input interface 35, an output interface 36, a communication interface 37, and a bus 38.

An element such as processor 31 and primary storage device 32 exchanges data, a signal, or the like through bus 38. Processor 31 processes various types of data by executing a program stored in primary storage device 32. A program to be executed by processor 31 and data to be referred to by processor 31 are stored in primary storage device 32. In one aspect, a dynamic random access memory (DRAM) may be employed as primary storage device 32.

A program, data, and the like are stored in secondary storage device 33 in a non-volatile manner. In one aspect, a non-volatile memory such as a hard disk drive (HDD) or a solid state drive (SSD) may be employed as secondary storage device 33. Therefore, secondary storage device 33 corresponds to a computer-readable recording medium having a program to be executed by a computer recorded thereon.

External device interface 34 is used when an external device is connected to data analysis apparatus 30. External device interface 34 may be, for example, a universal serial bus (USB) interface.

Input interface 35 is used for connection of an input device such as a keyboard 41 and a mouse 42. Input interface 35 receives a user operation and a user input through these input devices.

Output interface 36 is used, for example, for connection of an output device such as a display 43.

Communication interface 37 is used for communication by data analysis apparatus 30 with an external device. For example, communication interface 37 is used for communication by data analysis apparatus 30 over a network 44. Network 44 is, for example, a local area network (LAN). Fig. 2 shows a printer 45 as an exemplary external device that can communicate with data analysis apparatus 30 over network 44.

Data analysis apparatus 30 may optionally further include a reader configured to read information from a recording medium. The "recording medium" here may include a recording medium (for example, an optical recording medium such as a digital versatile disc (DVD)) that has a computer-readable program stored thereon in a non-transitory manner. The reader can read a program stored in the recording medium. The program read from the recording medium may be installed in secondary storage device 33 or the like. In addition, various programs to be executed by data analysis apparatus 30 may be downloaded from a server (not-shown) over a network (for example, network 44) and installed in data analysis apparatus 30.

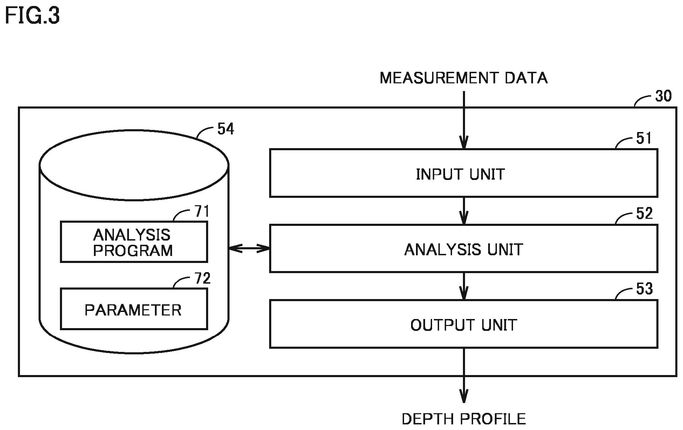

Fig. 3 is a diagram showing an exemplary functional block of the data analysis apparatus shown in Fig. 2. In one aspect, each block shown in Fig. 3 is implemented by a computer that executes a program according to the embodiment of the present disclosure.

As shown in Fig. 3, data analysis apparatus 30 includes an input unit 51, an analysis unit 52, an output unit 53, and a storage 54.

Input unit 51 receives measurement data outputted from measurement apparatus 20 (see Fig. 1). Input unit 51 further receives various types of information (for example, information on a type of a material and a chemical species, or the like) necessary for analysis of the depth profile of sample 25. For example, input unit 51 can be implemented by input interface 35 shown in Fig. 2.

An analysis program 71 for analysis of the depth profile of sample 25, a parameter 72 necessary for execution of the analysis program, or the like is stored in storage 54. Furthermore, measurement data inputted to data analysis apparatus 30 may be stored in storage 54. Storage 54 can be implemented by primary storage device 32 and secondary storage device 33 shown in Fig. 2.

Analysis unit 52 obtains the depth profile of sample 25 and accuracy thereof by executing analysis program 71. Specifically, analysis unit 52 calculates an average value of estimated values of the relative concentration for each depth and for each chemical species of sample 25 and a confidence interval of the estimated values, according to an analysis method which will be described later. Analysis unit 52 can be implemented by processor 31 (computing circuitry) shown in Fig. 2.

Output unit 53 outputs representation of the result of analysis by analysis unit 52. "Output of representation" means output of the result of analysis in a form recognizable by the user. For example, output unit 53 can be implemented by output interface 36 shown in Fig. 2. For example, the depth profile which is the result of analysis and the accuracy thereof may be shown on a screen of display 43 (see Fig. 2), in a form of a graph, numerical data, a table, or the like. The graph, the numerical data, the table, or the like that represents the result of analysis may be printed on paper by printer 45 (see Fig. 2). Alternatively, the result of analysis may once be outputted to (stored in) a storage device or a storage medium in a form of a sequence of numbers so as to allow representation processing (for example, graph representation) by software. In the embodiment of the present disclosure, output of the result of analysis in such a manner as being shown in a subsequent stage is also encompassed in "output of representation."

The technique to analyze the depth profile applicable to the embodiment of the present disclosure is not limited. In one embodiment, the analysis technique used by data analysis apparatus 30 is MSM. A method of obtaining estimation accuracy in estimation of the depth profile by MSM will be described below.

<2. Overview of MSM>

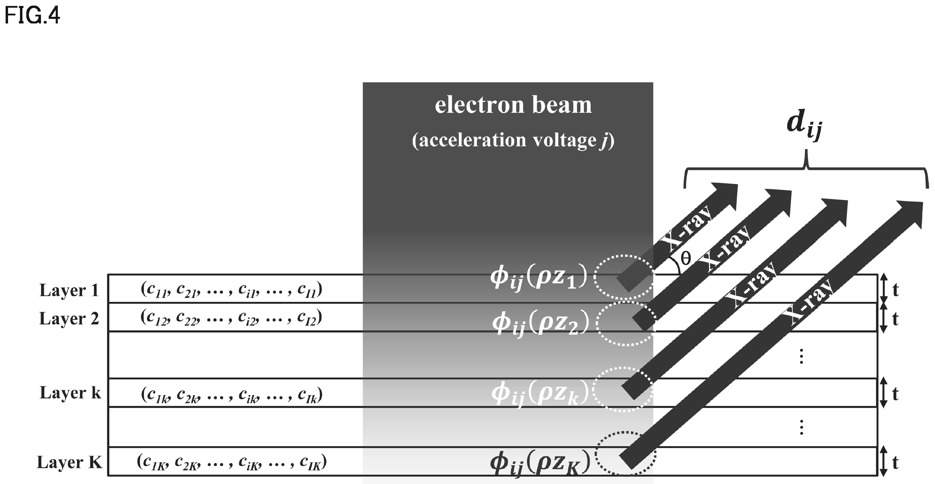

Fig. 4 is a schematic diagram showing a response signal generated as a result of incidence of a probe on a sample. Fig. 4 shows exemplary EDX analysis. The probe in EDX is electron beams, and the response signal is characteristic X-rays generated within the sample.

In MSM, the sample is regarded as a stack of K thin layers. Each layer has a thickness t. Electron beams incident on the sample at an acceleration voltage j (j representing a level of the acceleration voltage and satisfying relation of $1 \leq j \leq J$) successively excite characteristic X-rays in accordance with a chemical species located at that location, while attenuating within the sample. A degree of attenuation of electron beams is greatly dependent on acceleration voltage j of electron beams.

$\phi_{ij}(\rho z_k)$ represents a generation function of characteristic X-rays of a chemical species i generated in a kth layer (a mass depth $pz_k$). Characteristic X-rays generated within the sample travel toward a surface of the sample while attenuating within the sample, and they are emitted at an angle $\theta$ from the surface of the sample and detected by measurement apparatus 20 (see Fig. 1). j represents the level of the acceleration voltage.

In MSM, the depth profile in connection with the relative concentration of the chemical species of the sample is analyzed by using a theoretical value of the response signal when the sample to be analyzed is modeled to a multilayer structure composed of a plurality of layers to minimize a sum of squared deviation between the theoretical value of the response signal and a measured value of the response signal. In MSM, in minimization of the sum of squared deviation, the relative concentration is calculated to satisfy such a maximum smoothness condition that the relative concentration of the chemical species of the sample smoothly varies between the plurality of layers of the multilayer structure.

Specifically, in MSM, a function expressed in an expression (1) is to be analyzed.
[Math. 1]

$$\sum_{i=1}^{I}\sum_{j=1}^{J}\left(d_{ij} - d'_{ij}\right)^2 + \lambda_s \sum_{i=1}^{I}\sum_{k=1}^{K-1}(c_{ik+1} - c_{ik})^2 \quad (1)$$

In the expression (1), $d'_{ij}$ represents the theoretical value of measured intensity at acceleration voltage j in connection with chemical species i, and $d_{ij}$ represents data of the measured intensity at acceleration voltage j in connection with chemical species i, that corresponds to $d'_{ij}$. $c_{ik}$ represents the relative concentration of chemical species i in the kth layer. Relative concentration $c_{ik}$ satisfies relation of $0 \leq c_{ik} \leq 1$ and $\Sigma_i c_{ik} = 1$. I represents the total number of chemical species, J represents the total number of levels of the acceleration voltage, and K represents the total number of layers.

The first term in the expression (1) represents the sum of squared deviation between the theoretical value of the response signal and the measured value of the response signal. The second term in the expression (1) represents how smoothly the profile of the relative concentration of chemical species i varies in the depth direction. A parameter $\lambda_s$ is a parameter that represents how strongly smoothness of the profile is demanded as compared with the sum of squared deviation.

Relation between the profile and the theoretical value in EDX measurement can be expressed in accordance with an expression (2) below.
[Math. 2]

$$d' = Sc \quad (2)$$

d' in the left side of the expression (2) is a $(I \times J)$-row vector obtained by aligning theoretical values of intensity measured in EDX of all chemical species and at all angles. A vector c in the right side of the expression (2) is a $(I \times K)$-row vector obtained by aligning the depth profiles of all chemical species and in all layers. Specifically, vector c can be expressed as in an expression (3).
[Math. 3]

$$c = (c_{11}, \cdots, c_{1K}, c_{21}, \cdots, c_{2K}, \cdots, c_{I1}, \cdots, c_{IK})^T \quad (3)$$

S in the right side of the expression (2) is a matrix of $(I \times J)$ rows and $(I \times K)$ columns, and expressed in accordance with an expression (4).
[Math. 4]

$$S = \begin{pmatrix} S^{(1)} & \cdots & 0 \\ \vdots & \ddots & \vdots \\ 0 & \cdots & S^{(I)} \end{pmatrix} \quad S^{(i)} = \begin{pmatrix} r_1 s_{11}^{(i)} & r_1 s_{12}^{(i)} & & r_1 s_{1K}^{(i)} \\ r_2 s_{21}^{(i)} & r_2 s_{22}^{(i)} & \cdots & r_2 s_{2K}^{(i)} \\ \vdots & \vdots & & \vdots \\ r_J s_{J1}^{(i)} & r_J s_{J2}^{(i)} & & r_J s_{JK}^{(i)} \end{pmatrix} \quad (4)$$

$S^{(1)}$ to $S^{(1)}$ in the expression (4) are submatrices of J rows and K columns. A coefficient $r_j$ within a matrix S is a parameter provided for handling the relative concentration in a simplified manner. $s^{(i)}_{j\text{-}k}$ is expressed in accordance with an expression (5).

[Math. 5]

$$s_{jk}^{(i)} = \sigma_{ij}\varpi_i\phi_{ij}(\rho z_k)e^{\left[-\left(\frac{\mu}{\rho}\right)_{i1}\frac{t}{sin\theta}\right]}e^{\left[-\left(\frac{\mu}{\rho}\right)_{i2}\frac{t}{sin\theta}\right]}\cdots e^{\left[-\left(\frac{\mu}{\rho}\right)_{ik-1}\frac{t}{sin\theta}\right]} \quad (5)$$

In the expression (5), $\sigma_{ij}\varpi_i\phi_{ij}(\rho z_k)$ represents the generation function of characteristic X-rays of chemical species i generated in the kth layer (mass depth $\rho z_k$) at the time of irradiation of the sample with electron beams at the acceleration voltage at level j. $\varpi_i$ represents fluorescence yield of a generation function target signal of characteristic X-rays, and it is an indicator that indicates how readily characteristic X-rays are emitted when a chemical species is ionized. The exp term in the expression (5) represents attenuation of characteristic X-rays. In the expression (5), $(\mu/\rho)_{i1}$, $(\mu/\rho)_{i2}$, ... $(\mu/\rho)_{ik-1}$ represent coefficients of mass absorption of characteristic X-rays by chemical species i in a first layer, a second layer, ..., and a (k-1)th layer, respectively.

t in the expression (5) represents a mass thickness of each layer and $\theta$ represents an angle of extraction of characteristic X-rays. Normally, in EDX, since a relative angle between a detector and a sample is fixed, angle $\theta$ is determined in accordance with the configuration of the apparatus.

Therefore, the expression (1) which is the function to be minimized in MSM can be expressed by a matrix shown in an expression (6) and an expression (7).

[Math. 6]

$$\sum_{i=1}^{I} \sum_{k=1}^{J}\left(d_{ij} - d'_{ij}\right)^2 + \lambda_S \sum_{i=1}^{I} \sum_{k=1}^{K-1}(c_{ik+1} - c_{ik})^2 = \frac{1}{2}c^T(S^TS + \lambda_S Q_S)c - d^T S c \quad (6)$$

[Math. 7]

$$Q_S = \begin{pmatrix} Q_S^{(1)} & \cdots & 0 \\ \vdots & \ddots & \vdots \\ 0 & \cdots & Q_S^{(I)} \end{pmatrix} \quad Q_S^{(i)} = \begin{pmatrix} 1 & -1 & 0 & & & & & \\ -1 & 2 & -1 & \cdots & & & 0 & \\ 0 & -1 & 2 & & & & & \\ & \vdots & & \ddots & & & \vdots & \\ & & & & 2 & -1 & 0 & \\ & 0 & & \cdots & -1 & 2 & -1 \\ & & & & 0 & -1 & 1 \end{pmatrix} \quad (7)$$

Strictly, matrix S is also dependent on a profile c of the relative concentration (because an X-ray absorption coefficient is dependent on the relative concentration). In simple approximate means, however, S is handled as a constant. Then, the expression (6) above becomes a convex quadratic programming problem. Therefore, such a scheme for a self-consistent solution as obtaining an optimal solution c, using that optimal solution c to update matrix S, and obtaining next optimal solution c can be adopted.

Therefore, MSM can obtain a most likely result of analysis of relative concentration $c_{ik}$, in spite of unnecessity for an accurate initial value. Thus, MSM is applicable, for example, to a variety of scenes where analysis of the depth profile of the sample is required, such as development of a device or analysis of a defect.

<3. Necessity for Evaluation of Accuracy>

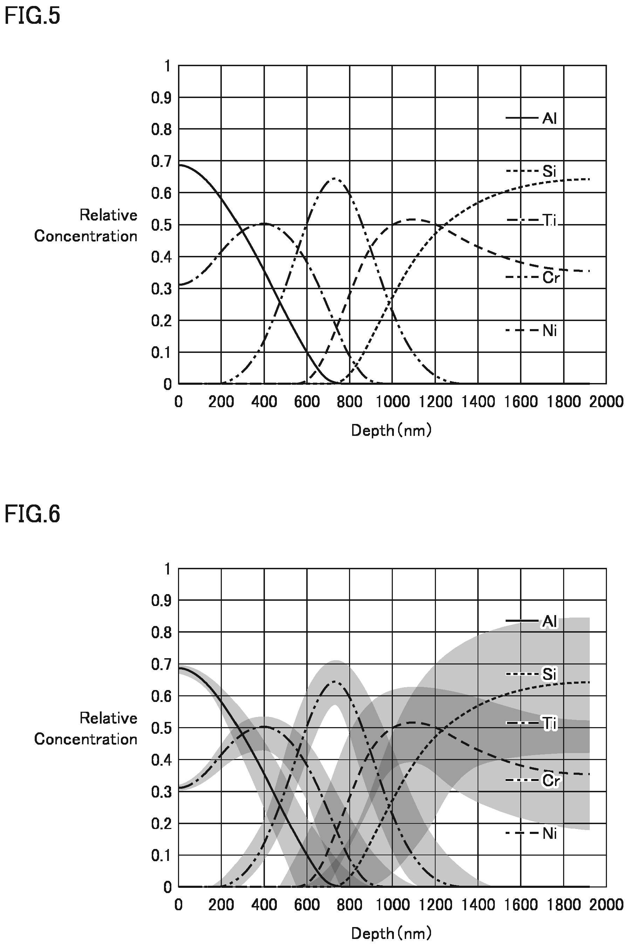

Fig. 5 is a diagram showing an exemplary result of analysis in EDX measurement by conventional MSM.

"Conventional MSM" is MSM described above. The sample to be analyzed is a sample in which aluminum (Al), titanium (Ti), chromium (Cr), and nickel (Ni) are layered on a silicon (Si) substrate in the order of proximity to the surface of the sample.

The result of analysis shown in Fig. 5 represents a distribution of the relative concentration of each chemical species along the depth direction from the surface of the sample. Fig. 5, however, does not show information on accuracy of the result of analysis.

Fig. 6 is a schematic diagram representing the distribution of the relative concentration of each chemical species and accuracy of the result of analysis. As shown in Fig. 6, the result of analysis of the relative concentration of each chemical species must have a width in accordance with accuracy of analysis. In the representation shown in Fig. 5, however, the user may recognize that an error of the result of analysis is zero. Such recognition is assumed to affect interpretation or the like of the result of analysis.

Therefore, in analyzing the depth profile by applying a nondestructive analysis technique like MSM, not only the depth profile obtained as the result of analysis but also information on accuracy of the result of analysis is desirably presented to the user. In a first embodiment below, a method of output of accuracy in MSM will be described.

<4. First Embodiment>

<<4.1 Evaluation of Accuracy Using Bayesian Estimation>>

Bayesian estimation has been known as a method of estimating reliability of some kind of a measured value based on measurement data. In the first embodiment, Bayesian estimation is applied to MSM. For distinction from conventional MSM (MSM that does not output accuracy), MSM to which Bayesian estimation is applied will herein be referred to as "Bayesian MSM."

In conventional MSM, on the assumption that there is a true value of relative concentration $c_{ik}$, one solution most likely from a situation is searched for, which corresponds to the convex quadratic programming problem in which a global optimal solution (a solution guaranteed to be best in the entire feasible area) is obtained. In conventional MSM, with the expression (1) being regarded as an evaluation function in connection with relative concentration $c_{ik}$, a set of relative concentrations $c_{ik}$ to be a minimum solution of the evaluation function is obtained. In conventional MSM, the expression (1) is formulated (derived) as a data term and a normalization term.

In Bayesian MSM, on the other hand, with relative concentration $c_{ik}$ being handled as a random variable, a likely distribution is searched for. Specifically, in Bayesian MSM, with the expression (1) being regarded as a distribution function in connection with relative concentration $c_{ik}$, an average and a variance of each $c_{ik}$ is approximately calculated. In Bayesian MSM, the expression (1) is formulated as a posterior distribution in accordance with a framework of Bayesian estimation.

Bayesian estimation is generally performed in a procedure below.

1. Assume a prior distribution of a parameter.
2. Assume a likelihood function of observation data.
3. Calculate probability a posteriori, using the Bayes' theorem.
4. Obtain an unknown probability distribution using a predicted distribution.

Each procedure above in Bayesian MSM will specifically be described below.

(1. Assumption of Prior Distribution of Parameter)

A prior distribution for relative concentration c of the chemical species is represented as p(c), a likelihood function when measurement data d is obtained from a certain depth profile is represented as p(d|c), and a posterior distribution of the depth profile after measurement data d is obtained is represented as p(c|d).

For the prior distribution in the depth profile, only an assumption that the distribution of the relative concentration is smooth is made. Prior distribution p(c) can be expressed in accordance with an expression (8) below.

[Math. 8]

$$p(c) = (I - 1)! \prod_{i=1}^{I} \prod_{k=1}^{K-1} \frac{1}{\sqrt{2\pi\sigma_S^2}} \exp\left[-\frac{(c_{ik+1}-c_{ik})^2}{2\sigma_S^2}\right] \quad (8)$$

Each relative concentration is assumed as a normal distribution, with the relative concentration in a layer immediately adjacent to a certain layer on a surface side being defined as the center. With a concentration distribution of a chemical species at an outermost surface or a deepest portion being assumed as a non-informative prior distribution, the concentration distribution is defined as a Dirichlet distribution where a parameter $\alpha$ is 1. In the expression (8), a factorial of (I-1) (that is, (I-1)!) is a normalization term of the Dirichlet distribution.

In the expression (8), $\sigma_s$ is a hyperparameter that represents a degree of variation in relative concentration of the chemical species at a boundary between layers. As hyperparameter $\sigma_s$ is larger, variation in profile is greater at the boundary between the layers. As hyperparameter $\sigma_s$ is smaller, on the other hand, the profile smoothly varies at the boundary between the layers.

(2. Assumption of Likelihood Function of Observation Data)

Measurement data d is assumed to vary within an appropriate range, around a theoretical value d' of the response signal. Likelihood function p(d|c) can be expressed in accordance with an expression (9) below.
[Math. 9]

$$p(d|c) = \prod_{i=1}^{I} \prod_{j=1}^{J} \frac{1}{\sqrt{2\pi\sigma_{ij}^2}} \exp\left[-\frac{(d_{ij}-d'_{ij})^2}{2\sigma_{ij}^2}\right] \quad (9)$$

In the expression (9), $\sigma_{ij}$ is a hyperparameter that represents reliability of a result of measurement by the measurement apparatus under a condition j of probe entry (the condition of the acceleration voltage in a case of EDX) into chemical species i and the sample. As hyperparameter $\sigma_{ij}$ is larger, the measurement data is less reliable data. As hyperparameter $\sigma_{ij}$ is smaller, on the other hand, the measurement data is more reliable data.

(3. Calculation of Probability a Posteriori)

Under the Bayes' theorem, posterior distribution p(c|d) is expressed in an expression (10) below.
[Math. 10]

$$p(c|d) = \frac{p(d|c)p(c)}{p(d)} \quad (10)$$

After data is observed, the denominator in the right side of the expression (10) becomes a constant not dependent on relative concentration c. Therefore, posterior distribution p(c|d) should only take into consideration the numerator in the right side of the expression (10).

Taking a logarithm of the numerator in the right side of the expression (10), an expression (11) is obtained.
[Math. 11]

$$log[p(d|c)p(c)] = -\frac{1}{2\sigma_S^2}\sum_{i=1}^{I}\sum_{k=1}^{K-1}(c_{ik+1}-c_{ik})^2 - \frac{1}{2}\sum_{i=1}^{I}\sum_{k=1}^{J}\frac{(d_{ij}-d'_{ij})^2}{\sigma_{ij}^2} +$$

$$const. \quad (11)$$

Accuracy for each individual measurement level is often actually unclear. For the sake of brevity, accuracy for each measurement level is defined as a constant value $\sigma_d$. A ratio $\lambda_S$ between variances $\sigma$s adjacent to each other in the depth profile is defined in accordance with an expression (12).
[Math. 12]

$$\lambda_S = \frac{\sigma_d^2}{\sigma_S^2} \quad (12)$$

By removing a constant portion from the expression (11) and applying the expression (12) to the expression (11), an expression (13) below is obtained.
[Math. 13]

$$-\log[p(c|d)] = \frac{1}{2\sigma_d^2}\left[\sum_{i=1}^{I}\sum_{j=1}^{J}(d_{ij} - d'_{ij})^2 + \lambda_S \sum_{i=1}^{I}\sum_{k=1}^{K-1}(c_{ik+1} - \right.$$

$$\left. c_{ik})^2\right] \quad (13)$$

An expression within [ ] in the right side of the expression (13) is the same as the expression (1). In MSM, a set of $c_{ik}$ that minimizes this expression is obtained.

In the left side of the expression (11), a minus sign is given to the logarithm of posterior distribution $p(c|d)$. Therefore, minimization of the right side of the expression (11) corresponds to maximization of posterior distribution $p(c|d)$. In other words, conventional MSM corresponds to a procedure of maximum a posteriori estimation (MAP) that maximizes the posterior distribution in modeling a process of generation of measurement data like the expression (8) and the expression (9).

(4. Obtain Unknown Probability Distribution)

Each point on the depth profile essentially has a concept corresponding to an average ($\mu$) and a variance ($\sigma$). The function expressed in the expression (1), however, is a complicated function expressed by many variables ($I \times K$ variables) in connection with relative concentration c. Therefore, it is difficult to immediately grasp information on the average and the variance of relative concentration c of each chemical species from the expression (1).

In the present embodiment, a prior probability distribution can be obtained by using each of two types of techniques of sampling and variational inference, which are representative techniques to obtain the prior probability distribution in Bayesian estimation.

<<4.2 Bayesian MSM by Sampling>>

In sampling, a large number of pairs of relative concentrations $c_{ik}$ as the variables are inputted to a distribution function, and an output value from the distribution function is obtained. In creating the pairs of relative concentrations $c_{ik}$, when the number of pairs can be concluded as being sufficient on condition that a certain rule is observed, the created distribution can be regarded as the true distribution.

Sampling is a technique that can handle any distribution function. Sampling, on the other hand, tends to be high in calculation cost. In addition, qualitative grasp of a result obtained in sampling tends to be difficult.

In MSM, a dimension of relative concentration c is ($I \times K$) dimensions. The ($I \times K$) dimensions is generally a high dimension and it is approximately 5000 dimensions by way of example, although depending on a type of the sample to be analyzed. Therefore, calculation of a function value by substituting all combinations of pairs of $c_{ik}$ into a prediction distribution function gives rise to a problem of failure in analysis in a realistic time period because of a long calculation time period.

In Bayesian estimation, a Markov chain Monte Carlo method (MCMC) is often used as a method of approximately calculating a posterior distribution when it is difficult to calculate the posterior distribution. The MCMC method is a method of realizing with ingenuity, a mechanism of "occurrence of a value at a relatively high frequency (low frequency) where a function is large (small)" for a high-dimensional system. In one embodiment, the Metropolis method which is the most basic method of MCMC can be adopted. Other techniques which are developments of the Metropolis method, such as a Hamiltonian Monte Carlo method and a replica exchange Monte Carlo method, may be employed.

In the present embodiment, MSM with the Metropolis method is performed in a procedure below to calculate an average value and a standard deviation for relative concentration $c_{ik}$.

1. Set an initial value (a vector having an element only of a dimension number) $c_0$ of a variable.
From a point of view of higher efficiency of calculation, a solution obtained by conventional MSM is preferably set as initial value $c_0$.
2. Convert initial value $c_0$ to a real value $b_{ik}$.

In MSM, relative concentration $c_{ij}$ is handled as a target of analysis. In the Metropolis method, preferably, for example, a random number is freely generated in accordance with a normal distribution. Relative concentration $c_{ij}$, however, is restricted to satisfy relation of $0 \le c_{ik} \le 1$ and $\Sigma_i c_{ik} = 1$. With such restriction, it becomes difficult to generate a random number. Therefore, in the first embodiment, this problem is solved by handling relative concentration $c_{ij}$ as below.

Initially, for real value $b_{ik}$ having any range, conversion of the variable by a softmax function as shown in an expression (14) below is considered.

[Math. 14]

$$c_{ik} = \frac{\exp(b_{ik})}{\sum_{i=1}^{I} \exp(b_{ik})} \quad (14)$$

The expression (14) is an expression for converting real value $b_{ik}$ to relative concentration $c_{ij}$ having a range from 0 to 1. The softmax function is a function to convert an input value such that a total of output values is 1 and to output the resultant input value.

Conversion from real value $b_{ik}$ to relative concentration $c_{ij}$ is unique. Relative concentration $c_{ij}$, however, is a ratio. Therefore, conversion from relative concentration $c_{ij}$ to real value $b_{ik}$ does not become unique. Therefore, as expressed in an expression (15) below, a constant $A_k$ is added to real value $b_{ik}$ for each depth k in the sample.

[Math. 15]

$$b_{ik} = \log(c_{ik}) + A_k \quad (15)$$

Even when real value $b_{ik}$ is determined in accordance with the expression (15), the value of relative concentration $c_{ij}$ in the expression (14) does not vary, which means that real value $b_{ik}$ has such a degree of freedom that the value can be shifted by constant $A_k$. Without any special circumstances, the average value of real values $b_{ik}$ is conveniently set to 0.

Therefore, in conversion from relative concentration $c_{ij}$ to real value $b_{ik}$, adjustment is made by adding constant $A_k$ for each depth k such that the average value of real values $b_{ik}$ at that depth is 0.

3. Set a proposal distribution.

Theoretically, any function is applicable to a proposal distribution. In one embodiment, a multivariate Gaussian distribution expressed in an expression (16) below is employed. Specifically, next b' is generated from a "range" of approximately Σ around current b. Σ represents a diagonal matrix (no correlation for each chemical species and depth) where all components are 0.1.

[Math. 16]

$$q(b',b) = \frac{1}{\sqrt{(2\pi)^{IK}|\Sigma|}} \exp\left[-\frac{1}{2}(b'-b)^T \Sigma^{-1}(b'-b)\right] \quad (16)$$

4. Generate one $b_{n+1}$ using q(b', b) expressed in the expression (16) from nth (n being an integer not smaller than 0) $b_n$.

That $b_{n+1}$ is converted to $c_{n+1}$ in accordance with the expression (15).

5. Calculate a difference of a logarithm of a true posterior distribution shown in an expression (17) below.

[Math. 17]

$$-\frac{1}{2}\left[c_{n+1}{}^T G c_{n+1} + h^T c_{n+1}\right] + \frac{1}{2}\left[c_n{}^T G c_n + h^T c_n\right] \quad (17)$$

G and h in the expression (17) are expressed in accordance with an expression (18) and an expression (19) below, respectively.

[Math. 18]

$$G = S^T S + Q_r \quad (18)$$

[Math. 19]

$$h^T = -2d^T S + p_r^T \quad (19)$$

6. Adopt $c_{n+1}$ when a calculated value in the expression (17) is equal to or larger than 0.

When a value calculated in accordance with the expression (17) is smaller than 0, a uniform random number r that takes a value from 0 to 1 is generated. When the value calculated in accordance with the expression (17) is equal to or larger than a value (which is a negative value) of log(r), that calculated value is adopted, and when the calculated value is smaller than the value of log(r), the value calculated in accordance with the expression (17) is not adopted.

7. Return to the procedure 4., using updated $c_{n+1}$. Iteratively perform the procedures 4. to 6. up to the designated number of times.

8. Calculate the average value and the standard deviation of estimated values of the relative concentration (relative concentration $c_{ik}$) for each depth and for each chemical species by iteratively performing the procedures 4. to 6. up to the designated number of times.

<<4.3 Bayesian MSM by Variational Inference>>

In Bayesian MSM by variational inference, a posterior distribution function is approximated to a simple function with which an average and a variance are readily grasped, and the approximated function is used to evaluate the average and the variance. An applicable range of variational inference is limited as compared with the MCMC method described previously. Variational inference, however, is generally lower in calculation cost. Furthermore, in variational inference, a result obtained by an approximate expression can qualitatively be understood.

In Bayesian MSM, a true posterior distribution function can be expressed in an expression (20).

[Math. 20]

$$log[p(c|d)] = -\frac{1}{2}[c^T G c + h^T c] + const. \quad (20)$$

A posterior distribution function obtained by approximation of the expression (20) is the Dirichlet distribution expressed in an expression (21) below. The expression (21) represents a distribution to generate such $c_{ik}$ as satisfying relation of $c_{ik} \in (0, 1)$ and $\Sigma_{i=1}^K c_{ik} = 1$. In the expression (21), the term $C_D(a_{1k}, ..., a_{IK})$ is a normalization term and the term $c_{ik}^{aik-1}$ is a term expressing the distribution.

[Math. 21]

$$q(c) = \prod_{k=0}^{K} C_D(a_{1k}, \cdots, a_{Ik}) \prod_{i=1}^{I} c_{ik}^{a_{ik}-1} \quad (21)$$

As shown in the expression (21), the average (expectation) and the variance of each relative concentration $c_{ik}$ can be expressed by an analysis expression of parameter $a_{ik}$. Therefore, as the expression (21) is obtained, the distribution of relative concentration $c_{ik}$ can be grasped.

In the present embodiment, parameter $a_{1k}$ in the expression (21) is adjusted to bring approximate posterior distribution q(c) expressed in the expression (21) as close as possible to true posterior distribution p(c). Various standards are applicable as the standard of proximity of the distribution.

By way of example, Kullback-Leibler (KL) divergence often used in Bayesian estimation is shown below. A technique to evaluate proximity between approximate posterior distribution q(c) and true posterior distribution p(c) is not limited to the technique using KL divergence. For example, another indicator corresponding to similarity between functions such as a "sum of squared difference between function values in a range of variables within which a function is defined" may be adopted.

With KL divergence, "proximity" between approximate posterior distribution q(c) and true posterior distribution p(c) can be expressed as in an expression (22) below.

[Math. 22]

$$KL[q(c)][p(c)] = \int q(c) log\left[\frac{q(c)}{p(c)}\right] dc$$

$$= \int q(c) log[q(c)] dc - \int q(c) log[p(c)] dc \quad (22)$$

The first term in the right side of the expression (22) is the term corresponding to entropy of approximate posterior distribution q(c). This term can be expressed as in an expression (23) below, based on a property of the Dirichlet distribution.

[Math. 23]

$$\int q(c) log[q(c)] dc = \sum_{k=0}^{K} \sum_{i=1}^{I} (a_{ik} - 1)[\psi(a_{ik}) - \psi(a_k)] +$$

$$\sum_{k=0}^{K} log[C_D(a_{1k}, \cdots, a_{Ik})] \quad (23)$$

The second term in the right side of the expression (22), on the other hand, is the term corresponding to entropy of true posterior distribution q(c). Using a general expression in connection with posterior distribution p(c|d), an expression (24) below holds.
[Math. 24]

$$-\log[p(c|d)] = \sum_{x=1}^{I} \sum_{y=1}^{I} \sum_{\alpha=0}^{K} \sum_{\beta=0}^{K} g_{\alpha\beta}^{(x,y)} c_{x\alpha} c_{y\beta} +$$

$$\sum_{x=1}^{I} \sum_{\alpha=0}^{K} p_{\alpha}^{(x)} c_{x\alpha} \quad (24)$$

Therefore, by arrangement and calculation for each content of $\Sigma$ in the expression (24), an expression (25) is obtained.
[Math. 25]

$$-\int q(c) log[p(c)] dc$$

$$= \sum_{x=1}^{I} \sum_{y=1}^{I} \sum_{\alpha=0}^{K} \sum_{\beta=0}^{K} \begin{cases} g_{\alpha\alpha}^{(x,x)} \dfrac{a_{x\alpha}(a_{x\alpha}+1)}{a_\alpha(a_\alpha+1)} & (x=y, \alpha=\beta) \\[2ex] g_{\alpha\alpha}^{(x,x)} \dfrac{a_{x\alpha}a_{y\alpha}}{a_\alpha(a_\alpha+1)} & (x \neq y, \alpha=\beta) \\[2ex] g_{\alpha\beta}^{(x,y)} \dfrac{a_{x\alpha}a_{y\beta}}{a_\alpha a_\beta} & (\alpha \neq \beta) \end{cases}$$

$$+ \sum_{x=1}^{I} \sum_{\alpha=0}^{K} h_{\alpha}^{(x)} \dfrac{a_{x\alpha}}{a_\alpha} \quad (25)$$

Integration in connection with $c_{ik}$ yields an expectation which is a first power or a second power of $c_{ik}$. Therefore, by using the property of the Dirichlet distribution, an expression in the expression (25) can be obtained.

With the expression (25) being maintained as it is, no particularly great problem will arise. From a point of view of acceleration or the like of calculation, however, the expression (25) is approximated as below.
[Math. 26]

$$\begin{cases} g_{\alpha\alpha}^{(x,x)} \dfrac{a_{x\alpha}(a_{x\alpha}+1)}{a_\alpha(a_\alpha+1)} & (x=y, \alpha=\beta) \\[2ex] g_{\alpha\alpha}^{(x,x)} \dfrac{a_{x\alpha}a_{y\alpha}}{a_\alpha(a_\alpha+1)} & (x \neq y, \alpha=\beta) \quad (26) \\[2ex] g_{\alpha\beta}^{(x,y)} \dfrac{a_{x\alpha}a_{y\beta}}{a_\alpha a_\beta} & (\alpha \neq \beta) \end{cases}$$

The expression in the upper tier of the expression (26) is not different from the expression in the third tier so long as relation of $a_\alpha$, $a_{x\alpha} \gg 1$ is satisfied. The expression in the middle layer of the expression (26) is not different from the expression in the third tier so long as relation of $a_\alpha \gg 1$ is satisfied. In the case of the expression in the upper tier and the expression in the middle tier, an error is allowed because it is only approximately 1/(IK) of the total and approximately 1/K of the total, and the expression in the upper tier and the expression in the middle tier are regarded as being identical to the expression in the lower tier. Then, the expression (25) can be expressed as in an expression (27) below.
[Math. 27]

$$-\int q(c) log[p(c)] dc = \bar{a}^T G \bar{a} + h^T \bar{a} \quad (27)$$

In the expression (27), a vector a is expressed as in expression (28) below. The expression (28) expresses an expectation of relative concentration c.
[Math. 28]

$$\bar{a} = \left(\frac{a_{11}}{a_1}, \cdots, \frac{a_{1K}}{a_K}, \cdots, \frac{a_{i1}}{a_1}, \cdots, \frac{a_{iK}}{a_K}, \cdots, \frac{a_{I1}}{a_1}, \cdots, \frac{a_{IK}}{a_K}\right)^T =$$

$$E\left[(c_{11}, \cdots, c_{1K}, \cdots, c_{i1}, \cdots, c_{iK}, \cdots, c_{I1}, \cdots, c_{IK})^T\right] \quad (28)$$

Specifically, by using the Dirichlet distribution as an approximate distribution and performing the approximation above, the expectation of a true logarithmic posterior distribution as it is becomes an expression the same as the true logarithmic posterior distribution. From the foregoing, KL divergence is expressed as in an expression (29) below.
[Math. 29]

$$\mathrm{KL}[q(c)][p(c)] = \sum_{k=0}^{K}\sum_{i=1}^{I}(a_{ik} - 1)[\psi(a_{ik}) - \psi(a_k)] +$$

$$\sum_{k=0}^{K}\log[C_D(a_{1k}, \cdots, a_{Ik})] + \bar{a}^T G \bar{a} + h^T \bar{a} \quad (29)$$

Specifically, in performing variational inference by using KL divergence, the expression (29) should only be minimized in connection with parameter $a_{ik}$.

When no prior distribution of a profile is assumed (a uniform distribution is assumed), the function of MSM includes only a deviation from measurement data, as shown in an expression (30).
[Math. 30]

$$\frac{1}{2\sigma_d^2}\left[\sum_{i=1}^{I}\sum_{j=1}^{J}\left(d_{ij} - d'_{ij}\right)^2\right] \quad (30)$$

KL divergence at this time is (the sum of squared deviation from measurement data)-(entropy of the system), which matches with the maximum entropy method (MEM). Specifically, Bayesian MSM based on the variational inference above is equivalent to MEM when the prior distribution other than entropy and normalization are not assumed. When EDX measurement accuracy is high (or regarded as being high), on the other hand, Bayesian MSM is equivalent to conventional MSM. Therefore, Bayesian MSM by variational inference using the Dirichlet distribution can be concluded as corresponding to a more generic concept of conventional MSM and MEM that encompasses them as a special case thereof.

<<4.4 Flow of Processing in Bayesian MSM by Data Analysis Apparatus>>

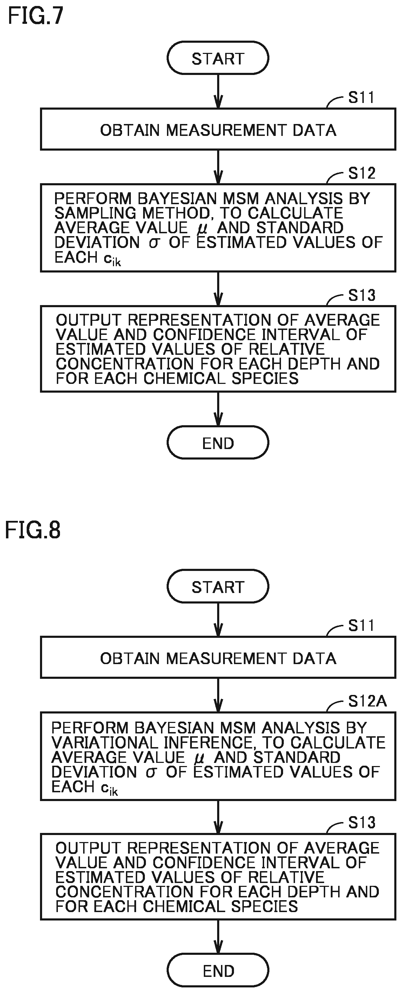

Fig. 7 is a flowchart showing an exemplary flow of processing in the data analysis method (Bayesian MSM) performed by the data analysis apparatus according to the first embodiment. Analysis unit 52 shown in Fig. 3 executes the analysis program stored in storage 54. Processing in the flowchart shown in Fig. 7 is thus performed.

As processing is started as shown in Fig. 7, in step S11, analysis unit 52 obtains measurement data (for example, EDX measurement data) outputted from measurement apparatus 20, with input unit 51 being interposed. This measurement data is data of the response signal generated from the sample as a result of incidence of the probe.

In step S12, analysis unit 52 performs Bayesian MSM analysis by a sampling method, with the use of the measurement data obtained in step S11, to thereby calculate an average value $\mu$ and a standard deviation $\sigma$ of estimated values of each relative concentration $c_{ik}$. By calculating standard deviation $\sigma$, analysis unit 52 calculates average value $\mu$ and the confidence interval of the estimated values of each relative concentration $c_{ik}$. In other words, in step S12, analysis unit 52 estimates relative concentration $c_{ik}$ for each depth from the surface of the sample and for each chemical species to analyze average value $\mu$ and the confidence interval of the estimated values.

In the present embodiment, the user can freely set the confidence interval. The confidence interval may be set, for example, to $\mu \pm 3\sigma$.

In step S13, analysis unit 52 outputs a result of analysis performed in step S12 to output unit 53. Output unit 53 performs processing for showing the result of analysis and outputs representation of the result of analysis. Therefore, in step S13, output unit 53 outputs representation of the average value and the confidence interval of the estimated values of the relative concentration for each depth and for each chemical species. Exemplary output of representation will be described later.

Fig. 8 is a flowchart showing another exemplary flow of processing in the data analysis method (Bayesian MSM) performed by the data analysis apparatus according to the first embodiment. The processing in the flowchart shown in Fig. 8 may be performed as analysis unit 52 shown in Fig. 3 executes the analysis program stored in storage 54. The processing in the flowchart shown in Fig. 8 is basically the same as the processing in the flowchart shown in Fig. 7, and processing in step S12 is replaced with processing in step S12A.

In step S12A, analysis unit 52 performs Bayesian MSM analysis by variational inference to calculate average

value $\mu$ and standard deviation $\sigma$ of the estimated values of each relative concentration $c_{ik}$. Analysis unit 52 calculates average value $\mu$ and the confidence interval of the estimated values of each relative concentration $c_{ik}$ by minimizing the expression (29) described above in connection with parameter $a_{ik}$.

Analysis unit 52 is not limited to the analysis unit that performs only one of the sampling method or variational inference. For example, analysis unit 52 may be configured to select one of the sampling method and variational inference in accordance with selection by the user.

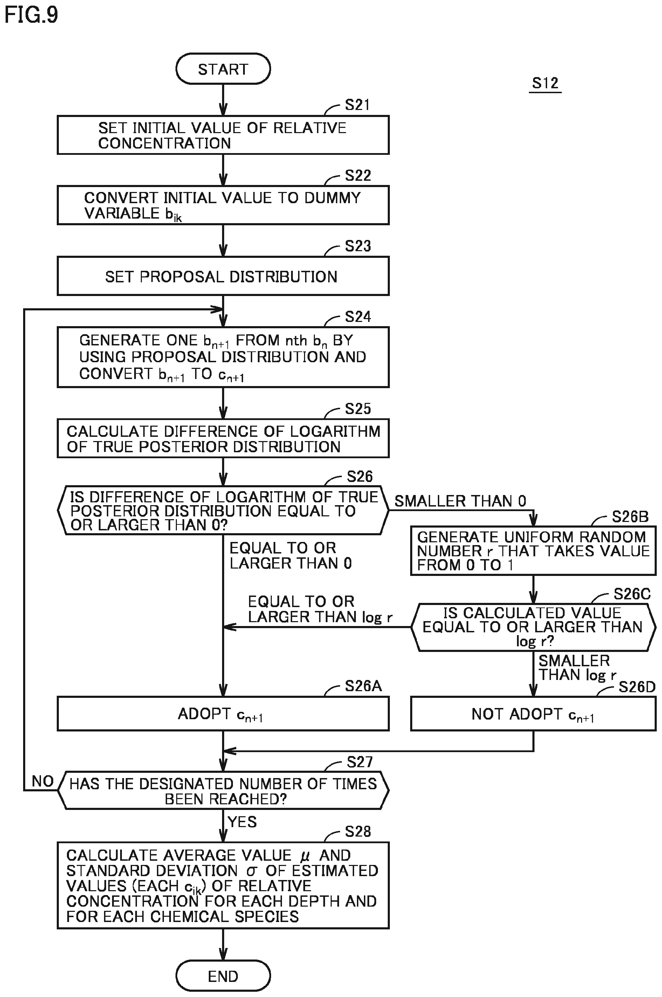

Fig. 9 is a flowchart showing an exemplary flow of processing in Bayesian MSM to which a sampling method is applied, the processing being performed by the analysis unit. Fig. 9 shows processing in accordance with the Metropolis method as a specific example of the processing in step S12 in Fig. 7.

In step S21, analysis unit 52 sets an initial value of the relative concentration. The initial value of the relative concentration may be obtained in advance. Alternatively, in step S21, analysis unit 52 may perform the method of analysis by conventional MSM to obtain the initial value of the relative concentration. The method of analysis by conventional MSM is a method of converging the value of relative concentration c in the expression (6) by iterating a flow of obtaining optimal solution c, updating matrix S by using that optimal solution c, and obtaining next optimal solution c. When variation in relative concentration $c_{ik}$ is sufficiently small (for example, equal to or smaller than a prescribed threshold value), analysis unit 52 can determine that the solution has converged. Therefore, that relative concentration $c_{ik}$ can be employed as the initial value.

In step S22, analysis unit 52 converts the initial value to a dummy variable $b_{ik}$ based on the expression (15).

In step S23, analysis unit 52 sets the proposal distribution. The proposal distribution may be a function set in advance. For example, the multivariate Gaussian distribution expressed in the expression (16) is set as the proposal distribution. Alternatively, in step S23, the user may set a function that expresses the proposal distribution for analysis unit 52.

In step S24, analysis unit 52 generates one $b_{n+1}$ from nth (n being an integer not smaller than 1) $b_n$ by using the proposal distribution set in step S23. Furthermore, analysis unit 52 converts $b_{n+1}$ to $c_{n+1}$ by using the expression (15).

In step S25, analysis unit 52 calculates a difference of the logarithm of the true posterior distribution based on the expression (17).

In step S26, analysis unit 52 determines whether or not the value calculated in the expression (17) is equal to or larger than 0. When the value calculated in the expression (17) is equal to or larger than 0, in step S26A, analysis unit 52 adopts $c_{n+1}$. When the value calculated in the expression (17) is smaller than 0, in step S26B, analysis unit 52 generates uniform random number r that takes a value from 0 to 1.

In step S26C, analysis unit 52 determines whether or not the value calculated in the expression (17) is equal to or larger than log r. When the value calculated in the expression (17) is equal to or larger than the value of log r, in step S26A, analysis unit 52 adopts $c_{n+1}$. When the value calculated in the expression (17) is smaller than the value of log r, in step S26D, analysis unit 52 does not adopt $c_{n+1}$.

After the processing in step S26A or step S26D, in step S27, analysis unit 52 determines whether or not processing in steps S24 to S26A or step S26D has been performed the designated number of times. The user can freely set the number of times. When the number of times of processing that is performed is smaller than the designated number of times, the process returns to step S24. When the number of times of processing that is performed reaches the designated number of times, on the other hand, in step S28, analysis unit 52 calculates the average value and the standard deviation of the estimated values of the relative concentration (that is, relative concentration $c_{ik}$) for each depth and for each chemical species. As processing in step S28 ends, the process shown in Fig. 9 ends.

<<4.5 Exemplary Analysis by Bayesian MSM>>

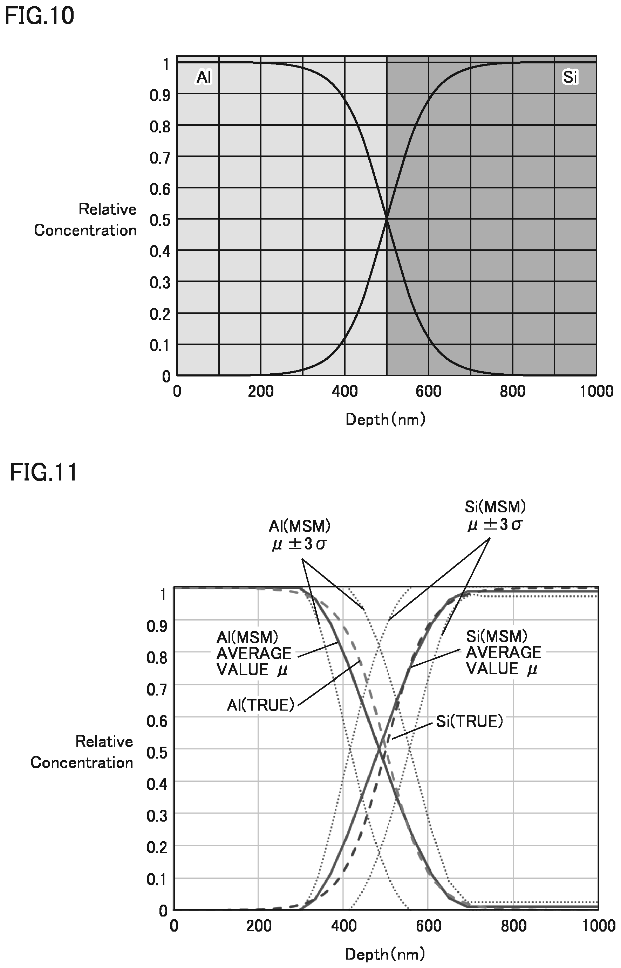

Fig. 10 is a diagram showing a structure of a model sample used in verification of the result of analysis by Bayesian MSM. As shown in Fig. 10, for analysis by Bayesian MSM, a model sample having a two-layered structure of aluminum (Al) and silicon (Si) was employed.

A theoretical value of intensity of the response signal (characteristic X-rays) when the model sample having the depth profile shown in Fig. 10 was subjected to EDX analysis was calculated by computation. The calculated theoretical value was set as input to Bayesian MSM to be performed by data analysis apparatus 30. Data analysis apparatus 30 performed the processes in accordance with the flowcharts shown in Figs. 7 and 8 to output the average values and the confidence intervals of the estimated values of the relative concentration for each depth and for each chemical species by both of the sampling method and variational inference. Evaluation corresponding to "accuracy" of the depth profile was performed based on output from data analysis apparatus 30. The value calculated by conventional MSM was adopted as the initial value of the depth profile of the relative concentration.

Fig. 11 is a diagram showing an exemplary result of analysis of the model shown in Fig. 10 by Bayesian MSM using the sampling method (Metropolis method). In Fig. 11, dashed lines specified by labels "Al (true)" and "Si (true)" represent the depth profiles corresponding to the depth profile shown in Fig. 10. In Fig. 11, solid lines specified by labels "Al

(MSM) average value $\mu$" and "Si (MSM) average value $\mu$" represent the average values of the estimated values of the relative concentrations for each depth and for each chemical species, that are obtained by Bayesian MSM using the Metropolis method. In Fig. 11, solid lines specified by labels "Al (MSM) $\mu \pm 3\sigma$" and "Si (MSM) $\mu \pm 3\sigma$" represent the confidence intervals of the estimated values of the relative concentrations for each depth and for each chemical species, that are obtained by Bayesian MSM using the Metropolis method.

In analysis by Bayesian MSM using the Metropolis method, $\sigma_d$ in the expression (12) was set to 0.1 and $\lambda_s$ in the expression (12) was set to 0.1. The number of times of iteration of calculation was set to 10,000. The result of analysis shown in Fig. 11 shows that, for both of Al and Si, the average value and the confidence interval of the estimated values of the relative concentration could be shown. Furthermore, the depth profile estimated by Bayesian MSM generally matches with the true depth profile.

Increase in $\lambda_s$ in the expression (12) corresponds to a small difference in relative concentration c between two adjacent layers in the prior distribution in Bayesian MSM. In other words, as in conventional MSM, also in Bayesian MSM, variation in the depth direction of average value "$\mu$" of the estimated values of relative concentration c is smoother as $\lambda_s$ is larger. "$\sigma$", on the other hand, generally tends to be maximal in the vicinity of relative concentration of 0.5. As $\lambda_s$ is larger, "$\sigma$" is generally larger.

In Bayesian MSM, variance $\sigma$ represents "uncertainty of prediction by Bayesian MSM" (which may be paraphrased as "lack of confidence in prediction"). Therefore, as the width of the confidence interval ($\mu \pm 3\sigma$) is smaller, the result of estimation by Bayesian MSM can be evaluated as being more "confident". As the width of the confidence interval ($\mu \pm 3\sigma$) is larger, on the other hand, the result of estimation by Bayesian MSM can be evaluated as being "less confident." In the example shown in Fig. 11, in each of an Al area and an Si area, the result of estimation by Bayesian MSM can be evaluated as being "confident". At an interface between the Al area and the Si area, on the other hand, the result of estimation by Bayesian MSM can be evaluated as being "less confident" than the result of estimation in each of the Al area and the Si area.

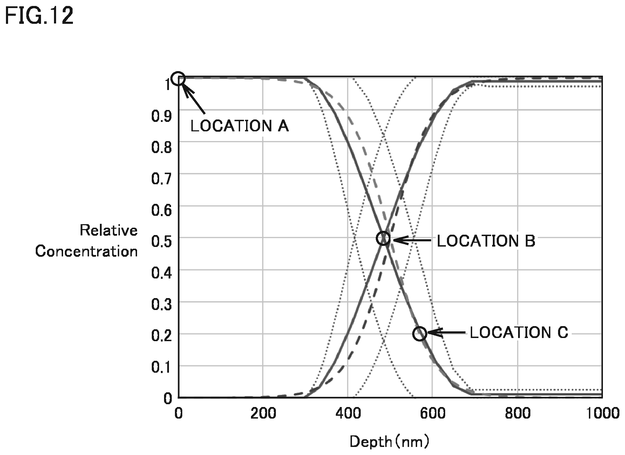

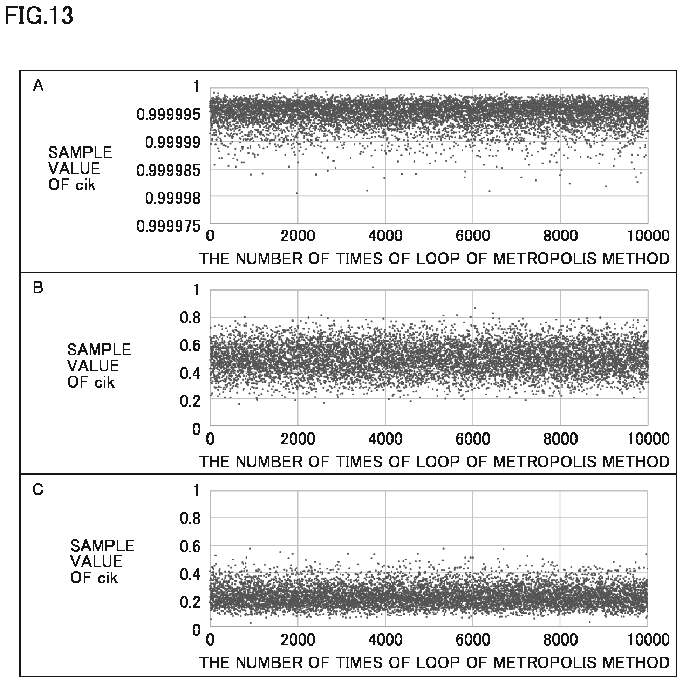

Fig. 12 is a diagram showing representative three locations in the depth profile shown in Fig. 11. Fig. 13 is a diagram showing a trace plot of values of the relative concentration at the three locations in the depth profile shown in Fig. 12. A "location A", a "location B", and a "location C" in the depth profile shown in Fig. 12 represent a position of the outermost surface of the sample, the boundary between the outermost layer of the sample and a layer next thereto, and a position in the layer next to the outermost layer of the sample. Fig. 13 shows distributions of values of relative concentration $c_{ik}$ corresponding to positions of the "location A," the "location B," and the "location C" in Fig. 12, respectively. At each of the location A, the location B, and the location C, such a tendency as variation in distribution with iteration of a loop of the Metropolis method was not observed, and it can be determined that such a result as reaching a steady state without any problem was obtained.

It is actually difficult to obtain the result shown in Fig. 11 even when the initial value completely different from the solution of relative concentration $c_{ik}$ obtained by conventional MSM is used for the Metropolis method. Therefore, in the case of Bayesian MSM to which the Metropolis method is applied, the solution of relative concentration $c_{ik}$ obtained by conventional MSM is desirably used for the initial value.

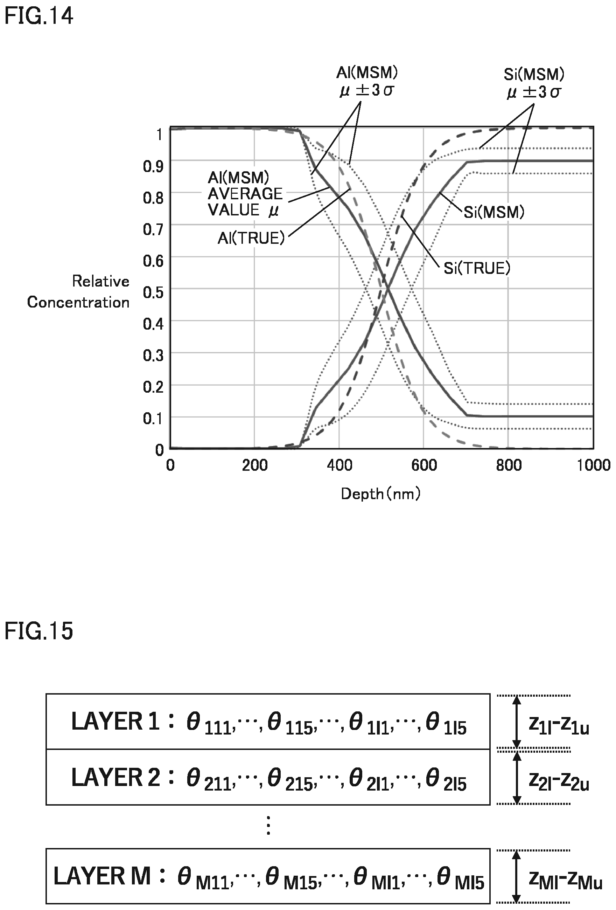

Fig. 14 is a diagram showing an exemplary result of analysis of the model shown in Fig. 10, by Bayesian MSM using variational inference. As in Fig. 11, dashed lines specified by labels "Al (true)" and "Si (true)" in Fig. 14 represent the depth profiles corresponding to the depth profiles shown in Fig. 10. Solid lines specified by labels "Al (MSM) average value $\mu$" and "Si (MSM) average value $\mu$" in Fig. 14 represent the average values of the estimated values of the relative concentration for each depth and for each chemical species, that are obtained by Bayesian MSM using variational inference. Solid lines specified by labels "Al (MSM) $\mu \pm 3\sigma$" and "Si (MSM) $\mu \pm 3\sigma$" in Fig. 14 represent the confidence intervals of the estimated values of the relative concentration for each depth and for each chemical species, that are obtained by Bayesian MSM using variational inference.

Similarly to the result of analysis shown in Fig. 11, in the result of analysis shown in Fig. 14, for both of Al and Si, the average value and the confidence interval of the estimated values of the relative concentration could be shown. As compared with the result of analysis shown in Fig. 11, however, variation in average value of the estimated values of the relative concentration for each depth and for each chemical species around the boundary between the Al area and the Si area slightly lacks smoothness. Such variation in average value may be affected by approximation of the posterior distribution function. Variational inference is generally low in calculation cost and ease in interpretation of the result is high because the result is expressed by an analysis formula. Selection of the technique can be made depending on whether smoothness of the result is prioritized or whether calculation cost and ease in interpretation of the result are prioritized.

<5. Second Embodiment>

According to the first embodiment, information (for example, the number of layers, a type of the layer, and the like) on the sample to be analyzed does not have to be obtained in advance. Information on the depth profile of the relative concentration of a chemical species even of a completely unknown sample can be obtained by performing, with a computer, Bayesian MSM with the use of EDX measurement data and the theoretical value of EDX measurement. Therefore, the analysis technique (Bayesian MSM) according to the first embodiment can be concluded as the estimation technique high in degree of freedom.

From a point of view of practical use, on the other hand, in estimation high in degree of freedom, interpretation of a result of estimation may become difficult, or there may be a plurality of ways of interpretation. Furthermore, a calculation time period necessary for obtaining the result of analysis may become long, although it depends on computation capability of a computer.

Therefore, a second embodiment relates to a technique to analyze the depth profile easier for the user to use. As in the first embodiment, the analysis technique according to the second embodiments uses Bayesian estimation.

In the second embodiment, when some kind of information on the sample has been obtained in advance, that information is used as prior knowledge for estimation of the depth profile of the relative concentration of the chemical species. "Prior knowledge" refers, for example, to the number of layers included in the sample, a composition of each layer, or the like.

Furthermore, in the second embodiment, in estimation of the depth profile of the relative concentration of the chemical species, the degree of freedom in connection with the depth profile is restricted. In other words, the depth profile is constrained. The number of times of calculation by data analysis apparatus 30 until reaching the depth profile close to the solution can thus be made smaller. According to the second embodiment, in terms of decrease in time period until the analysis result is obtained, the analysis technique easier for the user to use can be realized. Furthermore, by decreasing the number of times of calculation by data analysis apparatus 30, for example, calculation resources can be saved.

The analysis technique according to the second embodiment will be described in detail below.

<<5.1 Estimation Technique>>

In Bayesian MSM according to the first embodiment, only such a condition as smooth variation at the boundary between two adjacent layers was imposed on depth profile c of the relative concentration of the chemical species. In the second embodiment, in estimation of the depth profile of the relative concentration of the chemical species, the degree of freedom of the depth profile is restricted to a larger extent.

By way of example, the depth profile of the relative concentration of the chemical species satisfies such a condition as rising at a first depth and falling at a second depth deeper than the first depth. A function that expresses the depth profile of the relative concentration of the chemical species is not particularly limited so long as it satisfies the condition above. A function that can express a natural depth profile is more preferable.

For example, a sigmoid function can be used to express the depth profile. The sigmoid function is a function that converts each and every input value to a range from 0 to 1 and outputs the resultant value.

A function F shown in an expression (31) below is an exemplary function that expresses the depth profile of relative concentration c of chemical species i, and it is expressed by the sum of sigmoid functions. The first term in parentheses in the right side of the expression (31) is the sigmoid function that expresses rise of the depth profile, and the second term is the sigmoid function that expresses fall of the depth profile.

[Math. 31]

$$F(z; A, z_u, z_l, \sigma_u, \sigma_l) = A\left[\frac{1}{1+e^{\frac{z-z_u}{\sigma_u}}} + \frac{1}{1+e^{\frac{z-z_l}{\sigma_l}}} - 1\right] \quad (31)$$

In the expression (31), z represents a depth from the surface of the sample. A represents a composition of the sample (the relative concentration of the chemical species) and it is a value from 0 to 1. $z_u$ and $z_l$ each represent a position of the boundary between layers (depth from the surface of the sample). Therefore, $z_u$ and $z_l$ are each a variable relating to the thickness of the layer. $\sigma_u$ and $\sigma_l$ represent gentleness of rise and fall of the depth profile, respectively.

As shown in the expression (31), the depth profile of the sample is characterized by five types of parameters (A, $z_u$, $z_l$, $\sigma_u$, and $\sigma_1$) relating to the composition and the thickness of the layer. In the second embodiment, a set of these five types of parameters is handled as a random variable for Bayesian estimation. The set of the five types of parameters above will be expressed as a "parameter $\theta$" below.

Fig. 15 is a model diagram of a sample to which Bayesian estimation according to the second embodiment is applied. As shown in Fig. 15, the sample is modeled to a multilayer structure composed of M (M $\geq$ 1) layers. In each layer of the multilayer structure, the parameter is set for each chemical species. Since the total number of chemical species included in the sample is I, the depth profile of the relative concentration of the chemical species in each layer is expressed by application of (5×I) parameters $\theta$ to the expression (31). Parameters $z_u$, $z_l$, $\sigma_u$, and $\sigma_1$ among the five types of parameters are assumed as being common to all chemical species in the identical layer. In the second embodiment, presence of an identical chemical species in a plurality of layers is permitted.

With parameter θ being set as above, an appropriate parameter in accordance with a problem to be solved is selected from among the five types of parameters. The depth profile can thus be estimated. Bayesian estimation according to the second embodiment will be described below.

(1. Prior Distribution of Parameter θ)

The depth profile of the relative concentration of the chemical species in the sample model shown in Fig. 15 is defined by (5×I×M) parameters. Therefore, prior distributions of (5×I×M) parameters are set.

By way of example, the normal distribution is provisionally set as the prior distribution. The prior distribution of parameter θ in this case is expressed in accordance with an expression (32) below.

[Math. 32]

$$p(\theta_{miq}) = \frac{1}{\sqrt{2\pi\sigma_{miq}{}^2}}\exp\left[-\frac{(\theta_{miq}-\mu_{miq})^2}{2\sigma_{miq}{}^2}\right] \quad (32)$$

In the expression (32), $\theta_{miq}$ means a parameter q among parameters θ relating to chemical species i in an mth layer. $\mu_{miq}$ and $\sigma_{miq}$ mean the average and the variance of parameter $\theta_{miq}$, respectively.

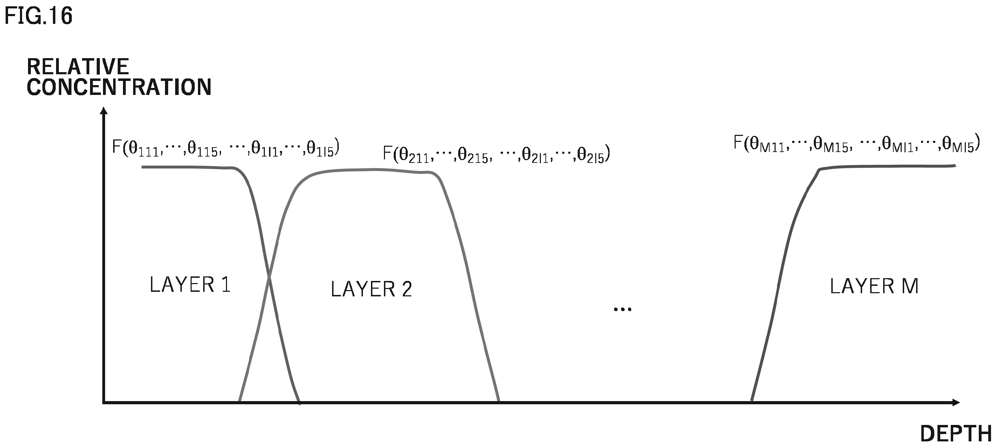

Fig. 16 is a diagram that schematically expresses a sigmoid function type depth profile. In Fig. 16, the abscissa of the graph represents the depth of the sample and the ordinate of the graph represents the relative concentration of the chemical species. The graph schematically shows the sigmoid function type depth profile for each layer from a layer 1 to a layer M.

In the second embodiment, the normal distribution is provisionally set as the prior distribution. Ultimately handling $\sigma_{miq}$ in the normal distribution as being very large, that is, as "lacking confidence of the prior distribution," is equivalent to assumption of no prior distribution.

(2. Likelihood Function)

In this embodiment, a likelihood function is expressed as p(d|θ). In other words, the likelihood function is expressed as a function of parameter θ when EDX measurement data (response signal d from EDX) is obtained from parameter θ. Specifically, in this embodiment, the likelihood function is expressed in accordance with an expression (33).

[Math. 33]

$$p(d|\theta) = \prod_{i=1}^{I}\prod_{j=1}^{J}\frac{1}{\sqrt{2\pi\sigma_{EDX\_ij}^2}}\exp\left[-\frac{(d_{ij}-d'_{ij})^2}{2\sigma_{EDX\_ij}^2}\right] \quad (33)$$

In the expression (33), $d_{ij}$ represents measurement data in EDX analysis at acceleration voltage j in connection with chemical species i and $d'_{ij}$ represents a theoretical value (the theoretical value of the response signal) in EDX analysis at acceleration voltage j in connection with chemical species i. $\sigma_{EDX\_ij}$ represents variation in EDX analysis at acceleration voltage j in connection with chemical species i. Relation between the depth profile and the theoretical value of EDX analysis follows the expression (2) to the expression (5) described above.

In the second embodiment, a shape of the depth profile is restricted to follow the sigmoid function. Therefore, the maximum smoothness condition imposed on MSM, that is, the condition that "in minimization of the sum of squared deviation, the relative concentration of the chemical species of the sample smoothly varies between the plurality of layers of the multilayer structure," is not required in the second embodiment.

(3. Expression of Posterior Distribution)

The posterior distribution of parameter θ after observation of EDX data can be expressed in accordance with an expression (34) below, based on the Bayes' theorem (see the expression (10)). Likelihood function p(d|θ) included in the expression (34) is expressed by the expression (33).

[Math. 34]

$$p(\theta|d) = \frac{p(d|\theta)p(\theta)}{p(d)} \quad (34)$$

Therefore, if the expression (34) can be plotted as the function of parameter θ, information on the average and the variance of parameter θ can be obtained.

Similarly to transform from the expression (10) to the expression (11), the logarithm of posterior distribution p(θ|d) is taken. Taking the logarithm of the right side of the expression (34), the logarithm (log[p(d|θ)p(θ)]) of posterior distribution p(θ|d) is expressed in accordance with an expression (35) below. For the sake of convenience of notation, in the expression (35), the sign of log[p(d|θ)p(θ)] in the left side is set to negative.

[Math. 35]

$$-log[p(d|\theta)p(\theta)]$$

$$= \frac{1}{2}\sum_{i=1}^{I}\sum_{k=1}^{J}\frac{\left(d_{ij}-d'_{ij}\right)^2}{\sigma_{EDX_{ij}}^2} + \frac{1}{2}\sum_{m=1}^{M}\sum_{i=1}^{I}\sum_{q=1}^{5}\frac{\left(\theta_{miq}-\mu_{miq}\right)^2}{\sigma_{miq}^2}$$

$$+ const. \quad (35)$$

Since p(d) (marginal likelihood) in the Bayes' theorem is a constant independent of parameter θ after observation of EDX measurement data, it is subsequently ignorable.

The first term and the second term in the right side of the expression (35) originate from the prior distribution of parameter θ. Since the prior distribution of parameter θ is uncertain, estimation of parameter θ is assumed as being "not confident at all." "Not being confident at all" corresponds to sufficiently large variance $\sigma_{miq}$. Therefore, the second term in the right side of the expression (35) is ignorable. If some kind of information on the parameter is obtained in advance, for example, by another analysis, feedback from a manufacturing process, or the like, the prior distribution may positively be used. A situation where there is no confidence in prior distribution is handled as the most general case below.

From the foregoing, the logarithm of posterior distribution p(θ|d) of parameter θ is expressed in accordance with an expression (36) below, by using the first term in the right side of the expression (35).

[Math. 36]

$$-log[p(\theta|d)] = \frac{1}{2}\sum_{i=1}^{I}\sum_{k=1}^{J}\frac{\left(d_{ij}-d'_{ij}\right)^2}{\sigma_{EDX_{ij}}^2} \quad (36)$$

The right side of the expression (36) is the function dependent on parameter θ, although that fact is not clearly shown. Therefore, the expression (36) is the function that expresses the posterior distribution of parameter θ.

<<5.2 Configuration of Analysis Unit>>

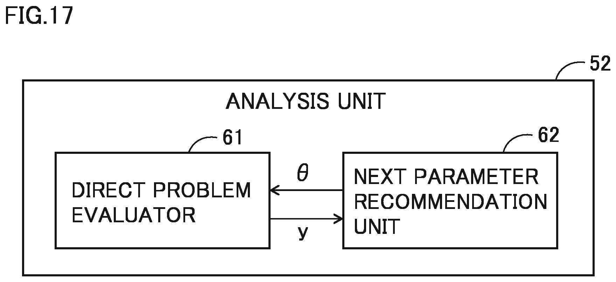

Fig. 17 is a functional block diagram showing an example in which analysis unit 52 shown in Fig. 3 is configured according to the second embodiment. As shown in Fig. 17, analysis unit 52 includes a direct problem evaluator 61 and a next parameter recommendation unit 62.

A direct problem is an analysis method of estimating a result (output) from a cause (input). Direct problem evaluator 61 receives a value of parameter θ from next parameter recommendation unit 62. Direct problem evaluator 61 uses the value of parameter θ for input to a direct problem model, so as to calculate the sum of squared deviation of a measurement theoretical value and an actually measured value when that value of the parameter is used. Direct problem evaluator 61 outputs a result of calculation of the sum of squared deviation as an output y.

Next parameter recommendation unit 62 receives output y from direct problem evaluator 61. Next parameter recommendation unit 62 uses output y to recommend a candidate value for parameter θ to be used for next calculation of the sum of squared deviation by direct problem evaluator 61. This candidate value for this parameter θ is herein also referred to as a "next parameter θ."

Processing in the data analysis method performed by the data analysis apparatus according to the second embodiment is similar to the processing shown in the flowchart shown in Fig. 7. In the data analysis method according to the second embodiment, however, processing corresponding to step S12 in Fig. 7 is different. Specifically, evaluation of the direct problem (calculation of the posterior distribution of parameter θ) by direct problem evaluator 61 and recommendation of next parameter θ by next parameter recommendation unit 62 are alternately iterated. The average value and the confidence interval of variables selected from parameters θ in accordance with the problem to be solved can be obtained.

Analysis unit 52 can output the value of parameter θ each time the number of times of iteration of evaluation of the direct problem and recommendation of next parameter θ reaches a prescribed number of times. Analysis unit 52 can thus calculate the average value and the confidence interval of each of the variables included in parameter θ, for each layer of the sample model. Therefore, analysis unit 52 can estimate the relative concentration for each depth from the surface of the sample and for each chemical species, and can calculate the average value and the confidence interval of the estimated values of the relative concentration.

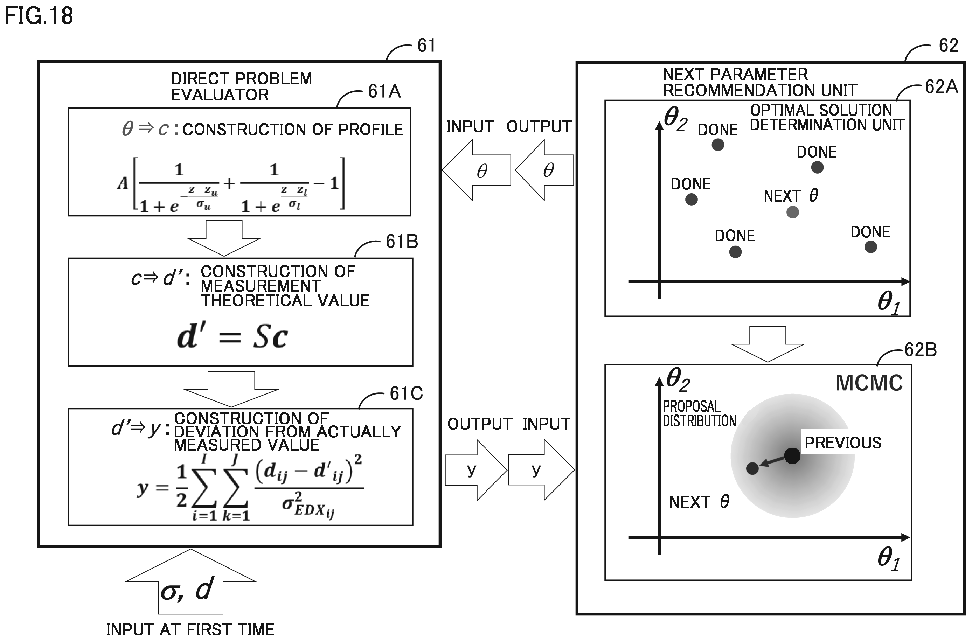

Fig. 18 is a block diagram showing an exemplary configuration of direct problem evaluator 61 and next parameter recommendation unit 62 shown in Fig. 17. As shown in Fig. 18, direct problem evaluator 61 includes a profile construction unit 61A, a measurement theoretical value construction unit 61B, and a squared deviation sum evaluator 61C.

Profile construction unit 61A determines the depth profile of relative concentration c of a chemical species for each layer and for each chemical species, by substituting parameter θ outputted from next parameter recommendation unit 62 into the expression (31).

Measurement theoretical value construction unit 61B converts in accordance with the expression (2), relative concentration c in accordance with the depth profile determined by profile construction unit 61A. Measurement theoretical value construction unit 61B thus converts relative concentration c to theoretical value (theoretical value of the response signal) d' of EDX measurement.

Squared deviation sum evaluator 61C obtains a value representing deviation between the theoretical value and the measured value in EDX measurement by applying measurement theoretical value d' in EDX obtained by measurement theoretical value construction unit 61B and EDX measurement data d to the expression (36). This value is the value included in the posterior distribution of parameter θ and corresponds to output y from direct problem evaluator 61. Values of parameters $(z_u, z_1)$ relating to thickness d of the layer and parameters $(\sigma_u, \sigma_1)$ representing gentleness of rise and fall of the depth profile of parameter θ are given to direct problem evaluator 61 at the time of first calculation by direct problem evaluator 61.

Next parameter recommendation unit 62 includes an optimal solution determination unit 62A and an MCMC implementation unit 62B. Optimal solution determination unit 62A determines (estimates) an optimal value of next parameter θ based on all records of parameters θ in the past. The optimal value of parameter θ estimated by optimal solution determination unit 62A is used as the initial value in the MCMC method performed by MCMC implementation unit 62B.

An optimization technique performed by optimal solution determination unit 62A is not particularly limited. For example, optimal solution determination unit 62A may determine next optimal parameter θ by using Bayesian optimization. For example, a gradient method, a covariance matrix adaptation evolution strategy (CMA-ES), or the like can also be adopted as another optimization technique, although the optimization technique is not particularly limited. In performing the optimization technique such as Bayesian optimization or CMA-ES, optimal solution determination unit 62A iteratively calculates the value of the logarithmic posterior distribution by varying a plurality of variables included in parameters θ (schematically represented as $\theta_1$ and $\theta_2$ in Fig. 18). As necessary, optimal solution determination unit 62A may refer to a plurality of records in the past. Optimal solution determination unit 62A thus obtains optimal parameters θ (that is, one set of optimal parameters).

In order to perform the optimization technique above with the computer, an already-known algorithm can be adopted. A computer program language for describing the algorithm is not particularly limited either.

MCMC implementation unit 62B proposes next parameter θ using a prescribed probability distribution in accordance with the MCMC method, with the value of parameter θ obtained by optimal solution determination unit 62A being defined as the initial value. MCMC implementation unit 62B outputs that parameter θ to direct problem evaluator 61.

In one embodiment, MCMC implementation unit 62B performs the Metropolis method, which is the most basic method of MCMC, to propose next parameter θ. Another technique which is further development of the Metropolis method, such as a Hamiltonian Monte Carlo method or a replica exchange Monte Carlo method, may be employed. MCMC implementation unit 62B sets the value of parameter θ inputted from optimal solution determination unit 62A as initial value θ (t = 0) in the Metropolis method.

MCMC implementation unit 62B then randomly samples a value a to be a candidate for a parameter θ(t+1) following a parameter θ(t), in accordance with a certain proposal distribution. Though the proposal distribution is not particularly limited, it may be, for example, a Gaussian distribution independent for each variable (not correlating for each variable) included in parameter θ. MCMC implementation unit 62B proposes the value of next parameter θ by taking the variance by random sampling from the proposal distribution, with the value of parameter θ at a certain time point being defined as the center.

MCMC implementation unit 62B calculates the logarithmic posterior distribution by using the proposed next value. In the second embodiment, the logarithmic posterior distribution corresponds to the sum of squared deviation between an EDX measurement theoretical value and an EDX measurement value. MCMC implementation unit 62B adopts the proposed value for next parameter θ when the value of the logarithmic posterior distribution is better (has become smaller) than the previous value. When the value of the logarithmic posterior distribution is worse (has become larger) than the previous value, on the other hand, MCMC implementation unit 62B generates uniform random number r that takes a value from 0 to 1.

When an absolute value of a difference between the value of the logarithmic posterior distribution and the previous value is smaller than an absolute value of log(r), MCMC implementation unit 62B adopts the proposed value for next parameter θ. When the absolute value of the difference between the value of the logarithmic posterior distribution and the previous value is equal to or larger than the absolute value of log(r), on the other hand, MCMC implementation unit 62B discards the proposed value for parameter θ and adopts the previous value of parameter θ. As in the first embodiment, in the MCMC method, even when the value of the logarithmic posterior distribution to be evaluated becomes worse than the previous value, the proposed value is adopted at a certain probability. By appropriately determining the probability of adoption, the posterior distribution of parameter θ is obtained.

With the MCMC method, in theory, if an infinite time period is spent with a correct method, a solution distribution can be obtained from whichever initial value the process may be started. In the MCMC method, a period from an initial point until convergence to a target distribution is called burn-in. In general, data in a burn-in state is discarded and various quantitative values are calculated.

In practice, a time period that can be spent for calculation is finite. Therefore, in the second embodiment, optimal solution determination unit 62A obtains the target value of parameter θ or a value in the vicinity of the target value, and that value is used as the initial value in the MCMC method. MCMC implementation unit 62B can shorten the burn-in period by using that initial value. Therefore, in MCMC implementation unit 62B, the calculation time period until reaching the solution distribution can be made shorter.

Though the MCMC method is generally used in evaluation of the posterior distribution of the parameter based on Bayesian inference, a method based on variational inference as in the first embodiment may be used. For example, a method of assuming the posterior distribution as a parametric distribution such as a Gaussian distribution or a gamma distribution and obtaining a parameter thereof or the like is also applicable.

In both of the first and second embodiments, the confidence interval (σ) of the estimated value of the relative concentration means a "Bayesian confidence interval." In the first embodiment, however, "σ" means an error including certainty of a layered structure, whereas in the second embodiment in which the layered structure is assumed in advance, "σ" means an error relating to the thickness and the composition of each layer and steepness of the depth profile at an interface between layers.

<<5.3 Exemplary Analysis>>

An example below shows a result of calculation of the thickness and the composition of the layer for some samples by analysis unit 52. The expression (31) was used as the expression that expresses the depth profile. The Gaussian distribution was set as the proposal distribution in the Metropolis method. The Gaussian distribution was set for each of the five types of parameters (variables) included in parameters θ. In the proposal distribution, it is assumed that variables do not correlate with one another.

For the value of standard deviation σ in the Gaussian distribution, $\sigma^2 = 1^2$ (nm²) was set for the thickness of the layer, and $\sigma^2 = 0.01^2$ was set for the composition. These values of σ correspond to variation by approximately 1 nm of the thickness of the layer and variation by approximately 0.01 of the composition of the layer for each loop of MCMC calculation.

(Example 1: Analysis of Ni Electrode and SiN Film on InP Wafer)

A sample in which a nickel (Ni) electrode and a silicon nitride (SiN) protective film were formed by patterning on an indium phosphide (InP) semiconductor wafer was made (a sample 1). Sample 1 was subjected to surface analysis by EDX. Thereafter, in order to verify reasonability of analysis according to the second embodiment, a cross-section of the sample was analyzed by STEM-EDX.

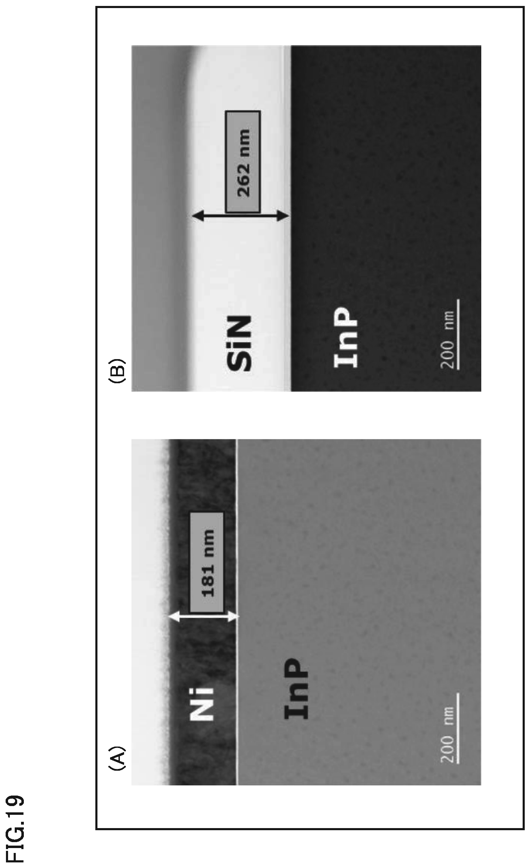

Fig. 19 is a diagram showing a STEM cross-sectional image of sample 1. As shown in Fig. 19(A) and Fig. 19(B), from the STEM image, the thickness of the Ni layer and the thickness of the SiN layer of sample 1 were evaluated as approximately 181 nm and approximately 262 nm, respectively. In a result of analysis by STEM-EDX, a ratio (In:P) between indium and phosphorus in a semiconductor substrate was approximately 0.55:0.45. It was evaluated from the result of analysis by STEM-EDX that, in sample 1, a phosphorus (P) element slightly came out of an InP substrate. A ratio (Si:N) between silicon and nitrogen in the SiN film was approximately 0.56:0.44. Therefore, this SiN film was evaluated as a silicon rich film.

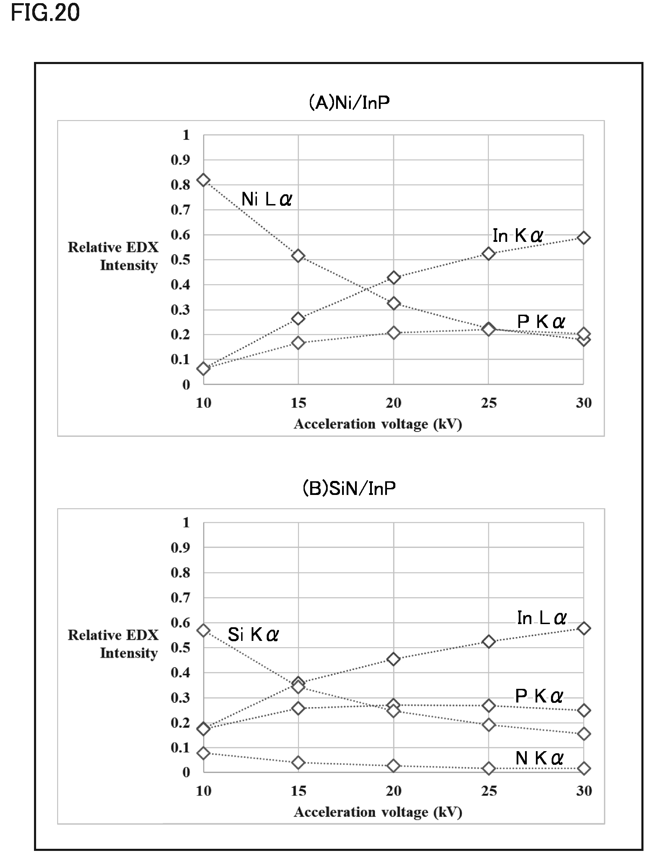

Fig. 20 is a diagram showing a result of EDX surface analysis of sample 1. A surface of the Ni electrode and a surface of the SiN film were both subjected to EDX surface analysis. Levels of the acceleration voltage of electron beams in EDX surface analysis were 10 kV, 15 kV, 20 kV, 25 kV, and 30 kV. Fig. 20(A) shows a result of EDX surface analysis on the surface of the Ni electrode, and Fig. 20(B) shows a result of EDX surface analysis on the surface of the SiN film.

EDX data at the five levels of the acceleration voltage was inputted to analysis unit 52 shown in Fig. 17. Analysis unit 52 analyzed the thickness of the Ni layer and the composition of In in the InP substrate in accordance with the MCMC method. The result of analysis by analysis unit 52 will be described in detail below.

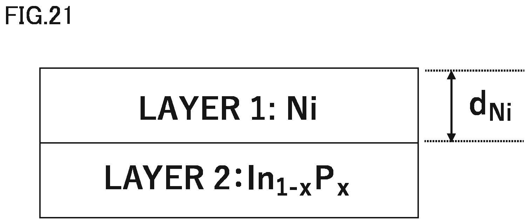

Fig. 21 is a diagram showing an analysis model (the Ni layer on the InP substrate) of sample 1. In the analysis model shown in Fig. 21, the sample is assumed to be composed of two layers of an Ni layer and an InP layer. The MCMC method was performed, with a thickness $d_{Ni}$ of the Ni layer and the In composition in the InP layer being defined as variables.

In the model shown in Fig. 21, among the five types of parameters of each of a layer 1 (Ni layer) and a layer 2 (InP layer), parameters $\sigma_u$ and $\sigma_1$ are assumed as being 50 nm and fixed. The depth profile was analyzed, with a composition A and film thicknesses $z_u$ and $z_1$ among parameters $\theta$ being defined as variables. In connection with the initial value to be used in the MCMC method, analysis unit 52 obtained the initial values of thickness $d_{Ni}$ of the Ni layer and the InP composition in accordance with the Bayesian optimization method.

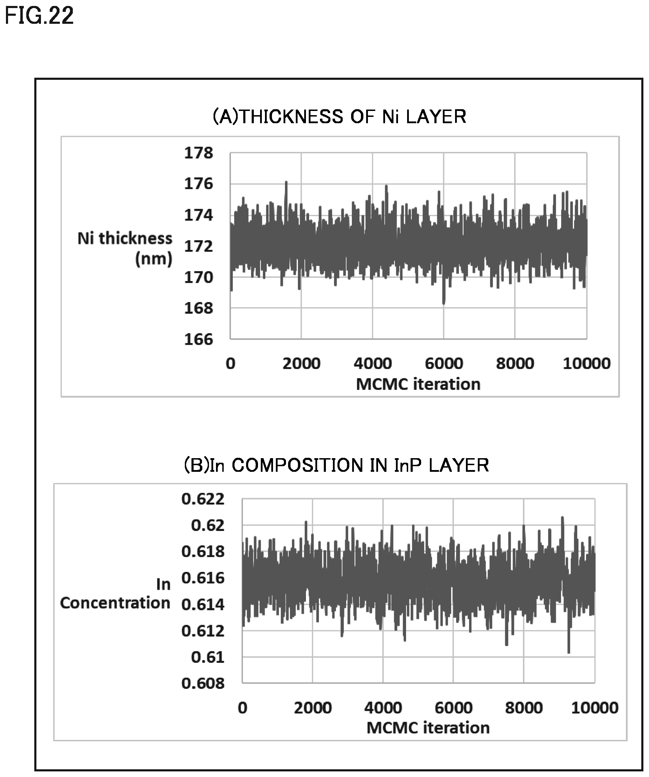

Fig. 22 is a diagram showing a result of calculation by analysis unit 52, of the thickness of the Ni layer and the In composition of InP according to the MCMC method. Fig. 22(A) shows fluctuation of the result of calculation with the number of times of iteration of the MCMC method, in connection with the thickness of the Ni layer. Fig. 22(B) shows fluctuation of the result of calculation with the number of times of iteration of the MCMC method, in connection with the In composition in the InP layer.

As shown in Fig. 22(A), the calculated value of the thickness of the Ni layer reaches a substantially steady state while a loop of the MCMC method is iterated, although it fluctuates around 172 nm. The value of the thickness of the Ni layer obtained in STEM-EDX analysis is approximately 181 nm. Therefore, according to the second embodiment, in connection with the thickness of the Ni layer, the value close to that in STEM-EDX analysis can be obtained by nondestructive analysis.

Similarly, as shown in Fig. 22(B), the calculated value of the In composition in the InP layer reaches a substantially steady state while a loop of the MCMC method is iterated, although it fluctuates around 0.616. Analysis according to the second embodiment yielded the result that the In composition in the InP layer was higher than 0.5. In other words, according to the second embodiment, similarly to the result in STEM-EDX analysis, the result indicating that phosphorus came out of the InP layer was obtained.

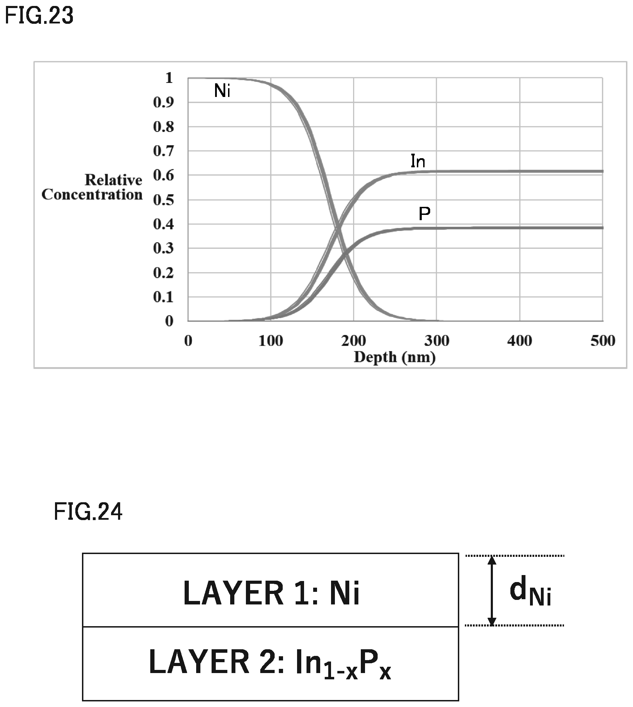

Fig. 23 is a diagram showing a result of analysis of sample 1 (the Ni layer on the InP substrate) by analysis unit 52. In Fig. 23, the abscissa of the graph represents the depth from the surface of the sample, and the ordinate of the graph represents the relative concentration of the chemical species. The number of times of iteration of calculation in the MCMC method was 10000.

Analysis unit 52 discarded results in first 1000 times of calculation in the MCMC loop, and calculated the average value ($\mu$) and the variance ($\sigma$) of the film thickness of the Ni layer and the average value ($\mu$) and the confidence interval ($\sigma$) of the In composition in the InP layer from remaining results of calculation. The average value ($\mu$) and the variance ($\sigma$) of the film thickness of the Ni layer were 172 nm and 0.99 nm, respectively. The average value ($\mu$) and the confidence interval ($\sigma$) of the In composition in the InP layer were 0.616 and 0.0014, respectively.

Analysis unit 52 picked up the results of calculation of the depth profile of the relative concentration every 1000 times from 1000 times until 10000 times in the MCMC loop, and output unit 53 (see Fig. 3) outputted representation of the picked-up results of calculation. A curve in the graph corresponds to representation of the depth profile of the relative concentration of each of Ni, In, and P outputted from output unit 53.

The depth from the surface corresponding to a position of intersection between the curve representing the relative concentration of Ni and the curve representing the relative concentration of In is approximately from 180 nm to 183 nm. A range of the depth corresponds to a range of the average value of the film thickness of the Ni layer $\pm\,3\sigma$. $\sigma$ obtained by the MCMC method can be regarded as the Bayesian confidence interval, that is, accuracy of the result of analysis in the second embodiment. Therefore, the curve shown in Fig. 23 represents the confidence interval of the estimated values of the relative concentration of the chemical species.

Fig. 24 is a diagram showing an analysis model (the SiN layer on the InP substrate) of sample 1. In the analysis model shown in Fig. 24, the sample is assumed to be composed of two layers of the SiN layer and the InP layer. The MCMC method was performed, with a thickness $d_{SiN}$ of the SiN layer and the In composition in the InP layer being defined as variables.

In the model shown in Fig. 24, among the five types of parameters of each of layer 1 (SiN layer) and layer 2 (InP layer), parameters $\sigma_u$ and $\sigma_1$ are assumed as being 50 nm and fixed. With composition A and film thicknesses $z_u$ and $z_1$ among parameters $\theta$ being defined as variables, the depth profile was analyzed for each of Si, N, and In. In connection with the initial value to be used in the MCMC method, analysis unit 52 obtained the initial values of thickness $d_{SiN}$ of the SiN layer and the InP composition in accordance with the Bayesian optimization method.

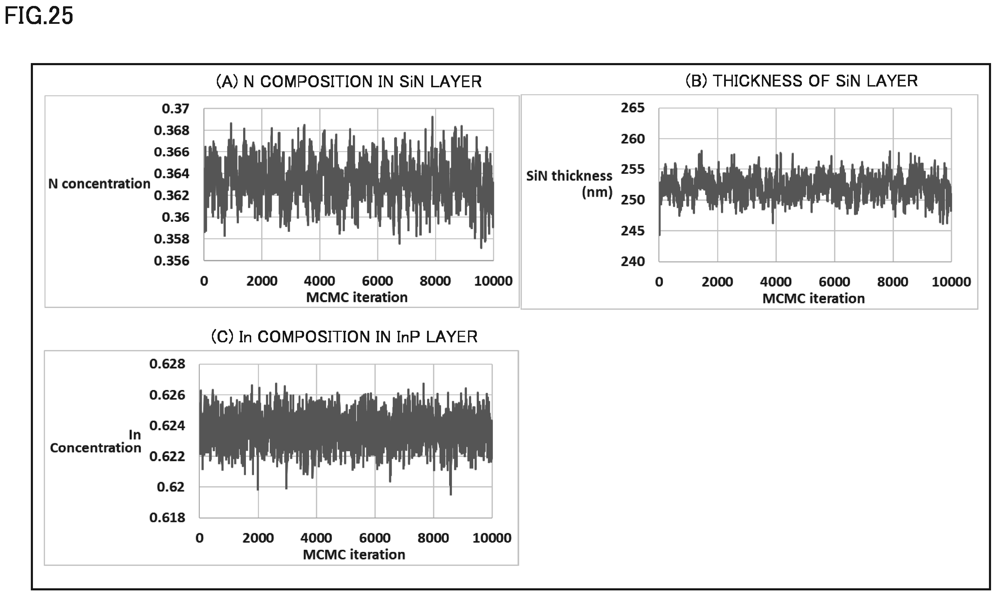

Fig. 25 is a diagram showing a result of calculation by analysis unit 52, of an N composition in the SiN layer, a thickness of the SiN layer, and the In composition in the InP layer according to the MCMC method. Fig. 25(A) shows fluctuation of the result of calculation of the N composition in the SiN layer, with the number of times of iteration of the MCMC method. Fig. 25(B) shows fluctuation of the result of calculation of the thickness of the SiN layer, with the number of times of iteration of the MCMC method. Fig. 25(C) shows fluctuation of the result of calculation of the In composition in the InP layer, with the number of times of iteration of the MCMC method.

As shown in Fig. 25(A), the calculated value of the N composition in the SiN layer reaches the substantially steady state while the loop of the MCMC method is iterated, although the value fluctuates around 0.363. As shown in Fig. 25(B), the calculated value of the thickness of the SiN layer reaches the substantially steady state while the loop of the MCMC method is iterated, although the value fluctuates around 253 nm. As shown in Fig. 25(C), the calculated value of the In composition in the InP layer reaches the substantially steady state while the loop of the MCMC method is iterated, although the value fluctuates around 0.624.

The results of analysis shown in Fig. 25 indicate that estimation by the MCMC method can be made also when the compositions of two layers are simultaneously varied. The result of analysis of the thickness of the SiN layer is a value close to the thickness (approximately 262 nm) obtained from the cross-sectional STEM image.

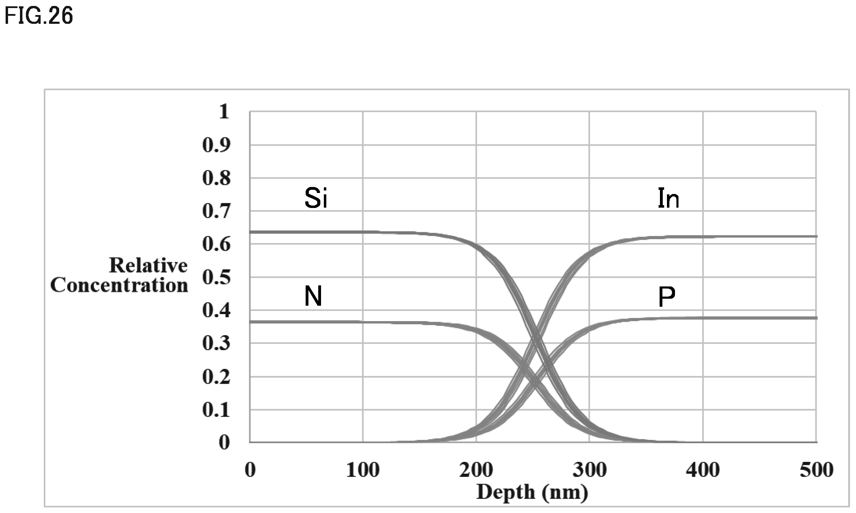

Fig. 26 is a diagram showing a result of analysis of sample 1 (the SiN layer on the InP substrate) by analysis unit 52. In Fig. 26, the abscissa of the graph represents the depth from the surface of the sample, and the ordinate of the graph represents the relative concentration of the chemical species. The number of times of iteration of calculation in the MCMC method is 10000.

Analysis unit 52 discarded results in first 1000 times of calculation in the MCMC loop, and calculated the average value ($\mu$) and the variance ($\sigma$) of the film thickness of the SiN layer, $\mu$ and $\sigma$ of the N composition in the SiN layer, and $\mu$ and $\sigma$ of the In composition in the InP layer from remaining results of calculation. $\mu$ and $\sigma$ of the film thickness of the SiN layer were 252 nm and 1.83 nm, respectively. $\mu$ and $\sigma$) of the N composition in the SiN layer were 0.364 and 0.0018, respectively. $\mu$ and $\sigma$ of the In composition in the InP layer were 0.624 and 0.0010, respectively.

Analysis unit 52 picked up the results of calculation of the depth profile of the relative concentration every 1000 times from 1000 times until 10000 times in the MCMC loop, and output unit 53 (see Fig. 3) outputted representation of the picked-up results of calculation. A curve in the graph corresponds to representation of the depth profile of the relative concentration of each of Si, N, In, and P outputted from output unit 53.

In analysis of sample 1 by STEM-EDX, the result that the SiN layer was Si rich (approximately 0.56) and the InP layer was In rich (approximately 0.55) was obtained. The result of analysis shown in Fig. 26 shows that the SiN layer was Si rich and the InP layer was In rich. Analysis of sample 1 according to the second embodiment shows the result consistent with the result of analysis by STEM-EDX, although it is nondestructive analysis.

(Example 2: Analysis of PFA Film on Cu Foil)

A sample was made by applying perfluoroalkoxy alkane (PFA) which was a kind of fluoroplastic on a copper (Cu) foil and thereafter firing the foil (a sample 2). As in Example 1, sample 2 was subjected to surface analysis by EDX. Thereafter, in order to verify reasonability of analysis according to the second embodiment, a cross-section of the sample was analyzed by STEM-EDX.

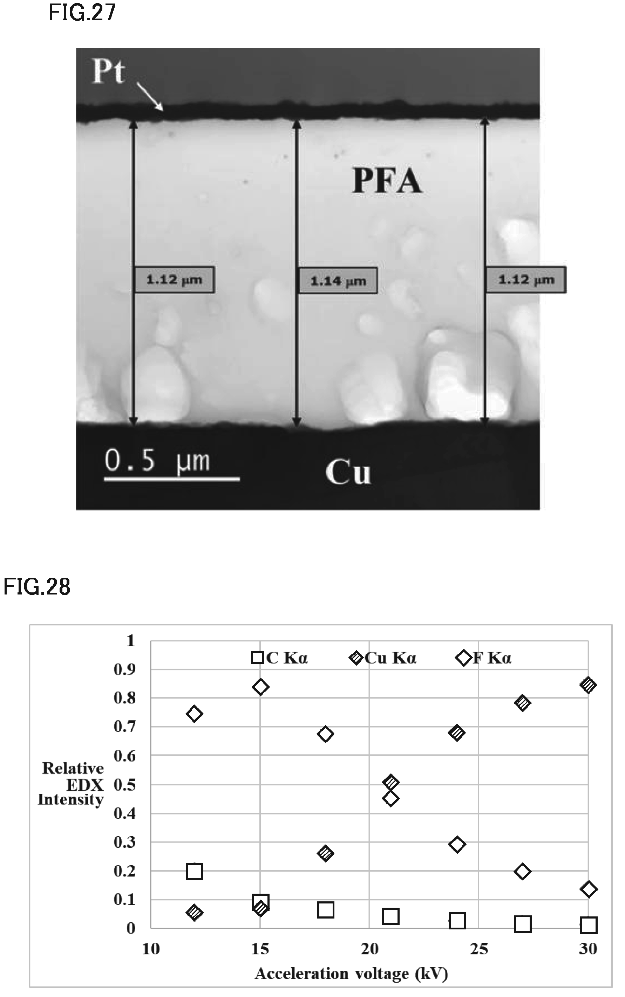

Fig. 27 is a diagram showing a STEM cross-sectional image of sample 2. As shown in Fig. 27, a thickness of a PDF layer was evaluated as approximately 1.1 $\mu$m from the STEM image.

Fig. 28 is a diagram showing a result of cross-section analysis of sample 2 by STEM-EDX. As shown in Fig. 28, EDX analysis was conducted at seven levels of the acceleration voltage. Since the PFA film is susceptible to damage by ions, it is difficult to evaluate the composition thereof with STEM-EDX. Therefore, gas cluster ion beam (GCIB)-XPS depth analysis was conducted to evaluate a composition ratio (C:F) between carbon (C) and fluorine (F) in the PFA film as approximately 1:2.

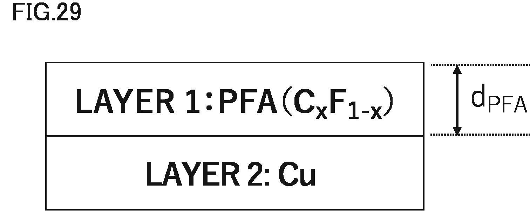

Fig. 29 is a diagram showing an analysis model of sample 2. In the analysis model shown in Fig. 29, the sample is assumed to be composed of two layers of a PFA layer and a Cu layer. Analysis unit 52 performs the MCMC method, with a thickness $d_{PFA}$ of the PFA layer and the composition of the PFA layer being defined as variables. In the model shown in Fig. 29, among the five types of parameters $\theta$ of layer 1 (PFA layer) and layer 2 (Cu layer), parameters $\sigma_u$ and $\sigma_1$ are assumed as being 50 nm and fixed. With composition A and film thicknesses $z_u$ and $z_1$ among parameters $\theta$ being defined as variables, the depth profile was analyzed.

In Example 2, for confirmation of stability of the present technique, a value that greatly deviates from the optimal value was intentionally adopted as the initial value to be used in the MCMC method.

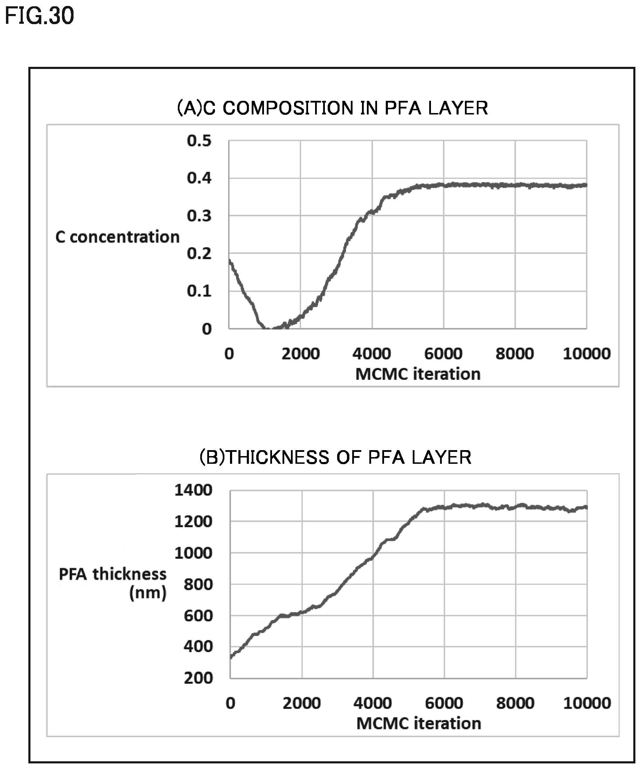

Fig. 30 is a diagram showing a result of calculation by analysis unit 52, of a carbon composition in the PFA layer and the thickness of the PFA layer according to the MCMC method. Fig. 30(a) shows fluctuation of the result of calculation of a C composition in the PFA layer, with the number of times of iteration of the MCMC method. Fig. 30(b) shows fluctuation of the result of calculation of the thickness of the PFA layer, with the number of times of iteration of the MCMC method. As shown in Fig. 30, even when the initial value in the MCMC method greatly deviates from the optimal value, the calculated value reaches the steady state as the number of times of iteration of calculation increases. In the example shown in Fig. 30, the calculated value can be regarded as having reached the steady state in 6000th calculation or later.

As is clear from Fig. 30, according to the MCMC method, even when the value that deviates from the optimal value is adopted as the initial value, the calculated value reaches a correct value by iterating loops of calculation a sufficiently large number of times. Therefore, determination of an appropriate initial value in the MCMC method by the optimization technique is not a requirement essential for performing the MCMC method. As is clear from comparison between Fig. 22 and Fig. 30, however, by using parameter θ obtained by the optimization technique as the initial value in the MCMC loop, the burn-in state can be shorter. Therefore, in the second embodiment, optimal solution determination unit 62A gives a value close to the optimal value to MCMC implementation unit 62B, as the initial value in the MCMC method. Since the number of times of calculation by data analysis apparatus 30 until reaching the depth profile close to the solution can thus be decreased, the calculation time period required for analysis of the depth profile can be shorter.

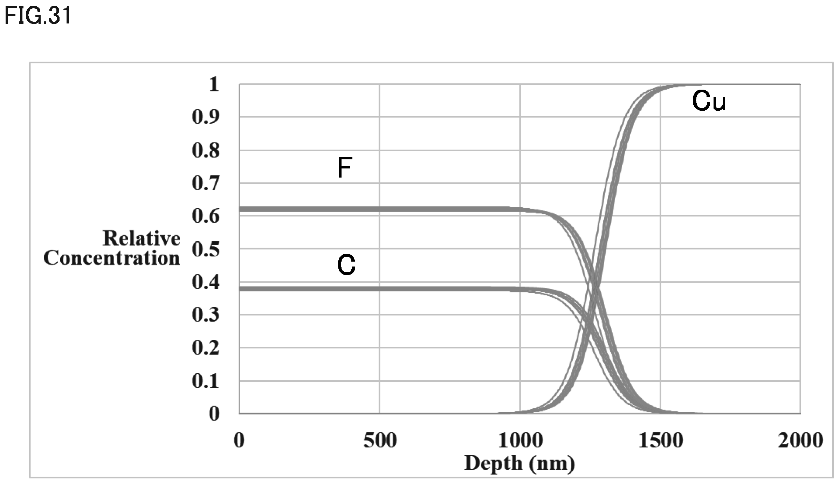

Fig. 31 is a diagram showing a result of analysis of sample 2 by analysis unit 52. In Fig. 31, the abscissa of the graph represents the depth from the surface of the sample, and the ordinate of the graph represents the relative concentration of the chemical species. The number of times of iteration of calculation in the MCMC method is 10000. As shown in Fig. 30, however, results in first 6000 times of calculation are unstable. Therefore, analysis unit 52 discarded the results in first 6000 times of calculation and calculated the average value (μ) and the variance (σ) of the film thickness of the PFA layer and μ and σ of the C composition in the PFA layer from remaining results of calculation. μ and σ of the film thickness of the PFA layer were 1292 nm and 10.2 nm, respectively. μ and σ of the C composition in the PFA layer were 0.38 and 0.0021, respectively.

Analysis unit 52 picked up the results of calculation of the depth profile of the relative concentration every 500 times from 6000 times until 10000 times in the MCMC loop, and output unit 53 (see Fig. 3) outputted representation of the picked-up results of calculation. A curve in the graph is a diagram showing the results of calculation picked up every 500 times from 6000 times to 10000 times in the MCMC loop. The curve in the graph corresponds to representation of the depth profile of the relative concentration of each of F, C, and Cu outputted from output unit 53.

The thickness of the PFA layer is estimated as approximately 1200 nm from the depth of intersection between the curve representing the relative concentration of F and the curve representing the relative concentration of Cu and the depth of intersection between the curve representing the relative concentration of C and the curve representing the relative concentration of Cu. Furthermore, a ratio between C and F in the PFA layer is estimated as approximately 1:2.

In the results of analysis by the MCMC method, values close to the thickness (approximately 1100 nm) of the PFA layer evaluated by STEM and the composition (C:F ~ approximately 1:2) obtained by evaluation by GCIB-XPS were obtained. Therefore, according to the second embodiment, it can be seen that, also in analysis in Example 2, the sample could correctly be evaluated in a nondestructive manner.

(Example 3): Analysis of Multilayer Film on Si Substrate

A multilayer film on a silicon (Si) substrate was made by electron beam (EB) vapor deposition (a sample 3). Sample 3 was subjected to surface analysis by EDX. Thereafter, in order to obtain information for verifying reasonability of analysis according to the second embodiment, a cross-section of the sample was analyzed by STEM-EDX.

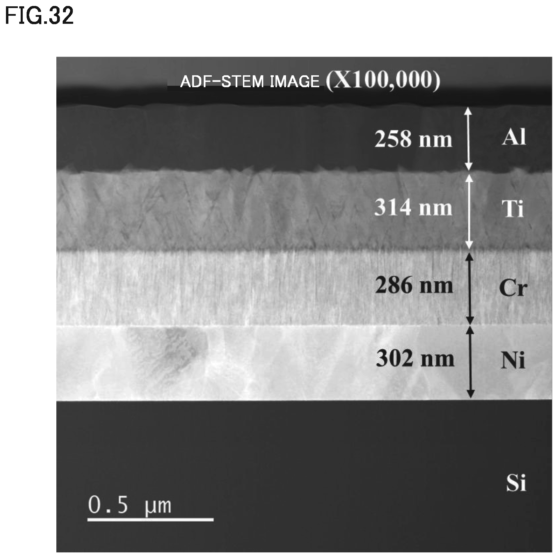

Fig. 32 is a diagram showing a STEM cross-sectional image of sample 3. As shown in Fig. 32, an Ni layer, a Cr layer, a Ti layer, and an Al layer were layered on a surface of the Si substrate in the order of proximity to the surface of the Si substrate. From the STEM image, thicknesses of the Ni layer, the Cr layer, the Ti layer, and the Al layer were evaluated as approximately 302 nm, 286 nm, 314 nm, and 258 nm, respectively.

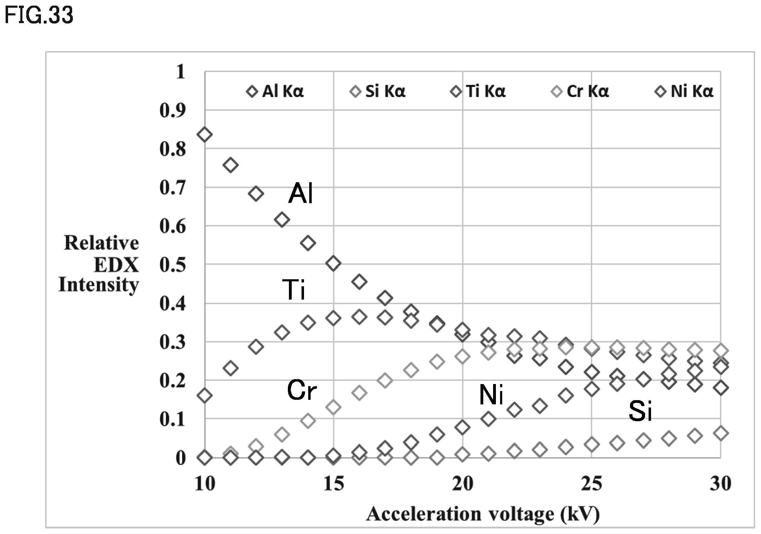

Fig. 33 is a diagram showing a result of EDX surface analysis of sample 3. EDX surface analysis was conducted at levels in 1-kV increment from acceleration voltage 10 kV to acceleration voltage 30 kV (21 levels in total). The MCMC method was performed based on data obtained in EDX surface analysis. With a structure of the sample being assumed as having already been known as an Al/Ti/Cr/Ni/Si structure, only thicknesses of four layers on the Si substrate were defined as variables.

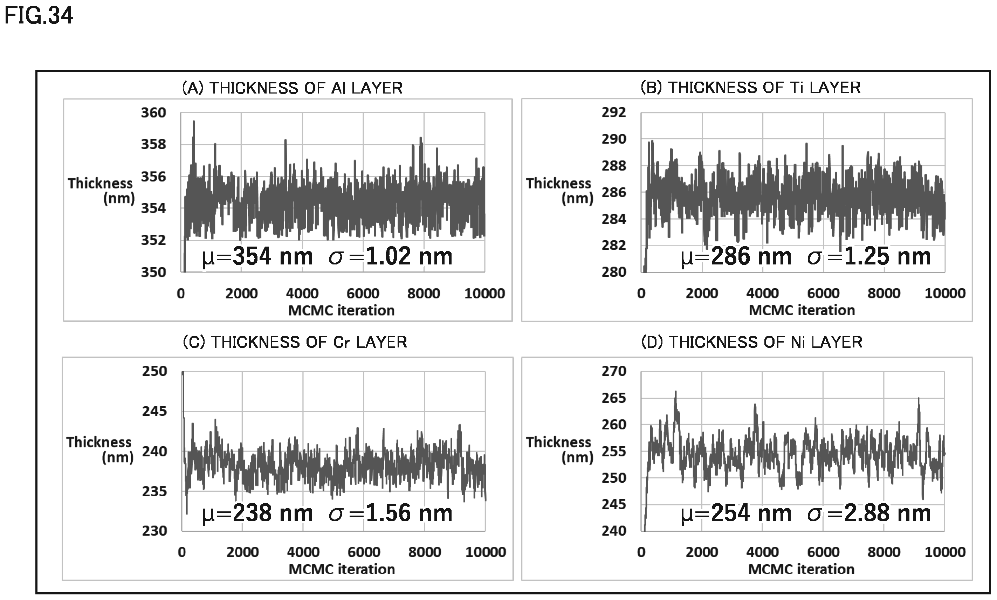

Fig. 34 is a diagram showing a result of calculation by analysis unit 52, of a thickness of the multilayer film of sample 3 according to the MCMC method. Fig. 34(A), Fig. 34(B), Fig. 34(C), and Fig. 34(D) show fluctuation of the results of calculation of the thickness of the Al layer, the thickness of the Ti layer, the thickness of the Cr layer, and the thickness of the Ni layer, with the number of times of iteration of the MCMC method. It can be evaluated in each of Fig. 34(A) to Fig. 34(D) that the calculated value has reached the steady state in first several hundred cycles or later. Each graph shows, for each film, the average value (μ) and the variance (σ) of the thickness calculated based on the calculated values in 1000 cycles or later.

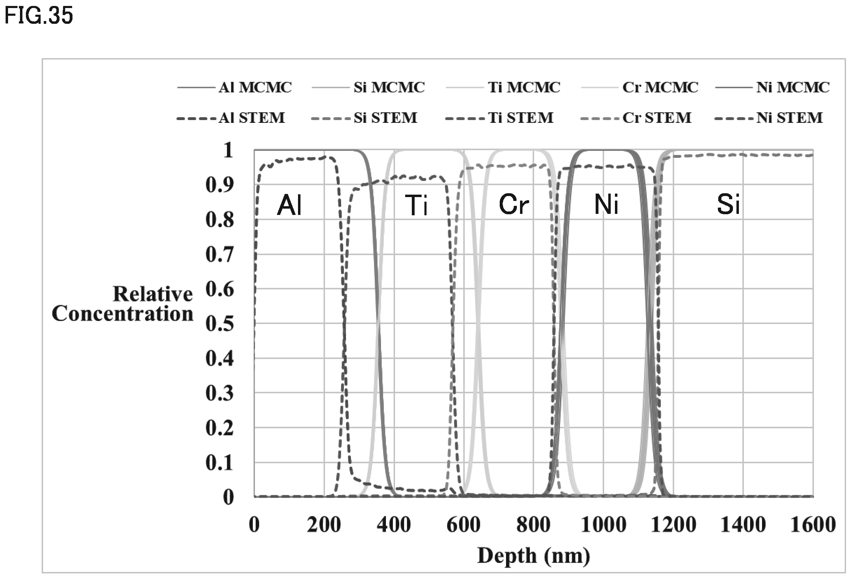

Fig. 35 is a diagram showing a result of profile evaluation of sample 3 by analysis unit 52. Fig. 35 shows with a solid line, a profile evaluated with the MCMC method performed by analysis unit 52 and shows with a dashed line, a profile evaluated by STEM-EDX. As shown in Fig. 35, the profile evaluated with the MCMC method well approximates to the profile evaluated by STEM-EDX. In other words, according to the second embodiment, even nondestructive evaluation of the sample can obtain the result close to evaluation by destructive evaluation.

According to Fig. 35, the position of intersection between the curve representing the relative concentration of Al and the curve representing the relative concentration of Ti corresponds to the interface between the Al layer and the Ti layer. Similarly, the position of intersection between the curve representing the relative concentration of Ni and the curve representing the relative concentration of Si corresponds to the interface between the Ni layer and the Si layer. In evaluation according to the second embodiment, an estimated range of the position of the interface between the Ni layer and the Si layer is larger than an estimated range of the position of the Al/Ti interface, which indicates that the result of estimation by MCMC at a deeper side of the sample (a side closer to the Si substrate) is less confident than the result of estimation at the outermost surface of the sample. The measured value in EDX analysis which serves as the basis of MCMC analysis affects the outermost surface to a larger extent and affects a deeper position to a lesser extent. Therefore, the result of analysis that the result of estimation is less confident at the deep side shown in Fig. 35 can be concluded as being reasonable.

<<5.4 Relation Between the Number of Pieces of Measurement Data and Result of Estimation>>

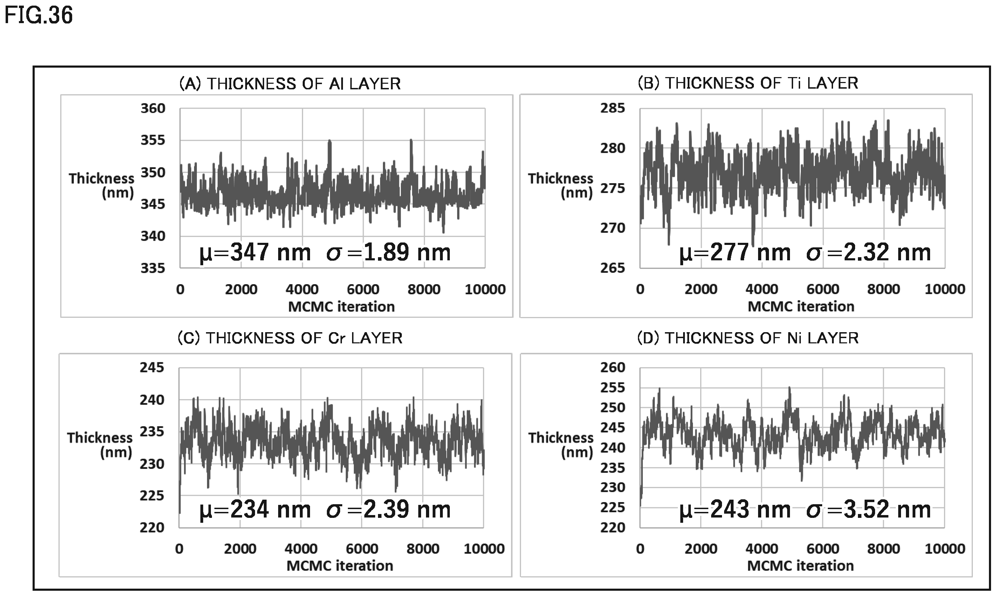

Fig. 36 is a diagram showing a result of calculation by analysis unit 52, of the thickness of the multilayer film of sample 3 according to the MCMC method when the number of pieces of EDX measurement data (in other words, the number of levels of the acceleration voltage) is decreased. Specifically, the MCMC method was performed with the use of measurement data at three levels (10 kV, 20kV, and 30kV), of EDX measurement data. Fig. 36(A) to Fig. 36(D) are diagrams to be compared with Fig. 34(A) to Fig. 34(D), respectively.

Based on comparison with the average value and the variance of each layer, average value $\mu$ does not greatly vary even when the number of levels is decreased. Variance $\sigma$, on the other hand, uniformly increases in the result of evaluation of any layer. Figs. 34 and 36 quantitatively show the fact that "as the number of pieces of measurement data used for evaluation is larger, the result of estimation is more confident" in Bayesian estimation.

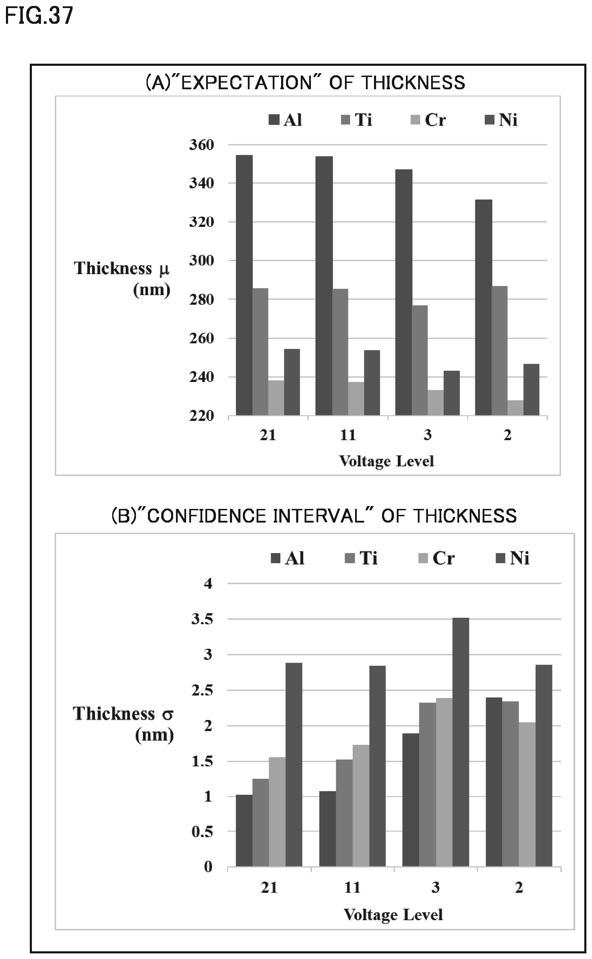

Fig. 37 is a diagram showing influence by the number of pieces of measurement data on estimation of the film thickness of sample 3 by the MCMC method. Fig. 37(A) shows an expectation (average value $\mu$) of the thickness with respect to the number of levels of the acceleration voltage. Fig. 37(B) shows the confidence interval (variance $\sigma$) of the thickness with respect to the number of levels of the acceleration voltage. As there are more levels of the acceleration voltage, there are a larger number of pieces of EDX measurement data. When the number of pieces of measurement data to be used for evaluation of the film thickness is made smaller (the number of levels of the acceleration voltage is smaller), variation in expectation (average value $\mu$) of the thickness of each layer tends to be less, whereas the confidence interval (variance $\sigma$) of the thickness of each layer tends to be larger.

By thus applying Bayesian estimation to estimation of the film thickness, relation between the number of pieces of data and uncertainty can be evaluated. Therefore, the number of pieces of measurement data necessary for evaluation can be determined in accordance with a degree of lack of confidence of the result of estimation, that is, uncertainty of the result of estimation. The degree of uncertainty of the result of estimation is accuracy of evaluation so to speak. In other words, according to the second embodiment, the number of pieces of necessary measurement data may be determined in accordance with accuracy required in evaluation.

<6. Exemplary Output of Representation>

As data analysis apparatus 30 performs Bayesian MSM above, the average value of the estimated values of the relative concentration for each depth and for each chemical species of the sample and the confidence interval of the estimated values can be calculated. Data analysis apparatus 30 can output representation of the average value and the confidence interval in various manners. Representation of the average value and the confidence interval is shown, for example, on the screen of the display.

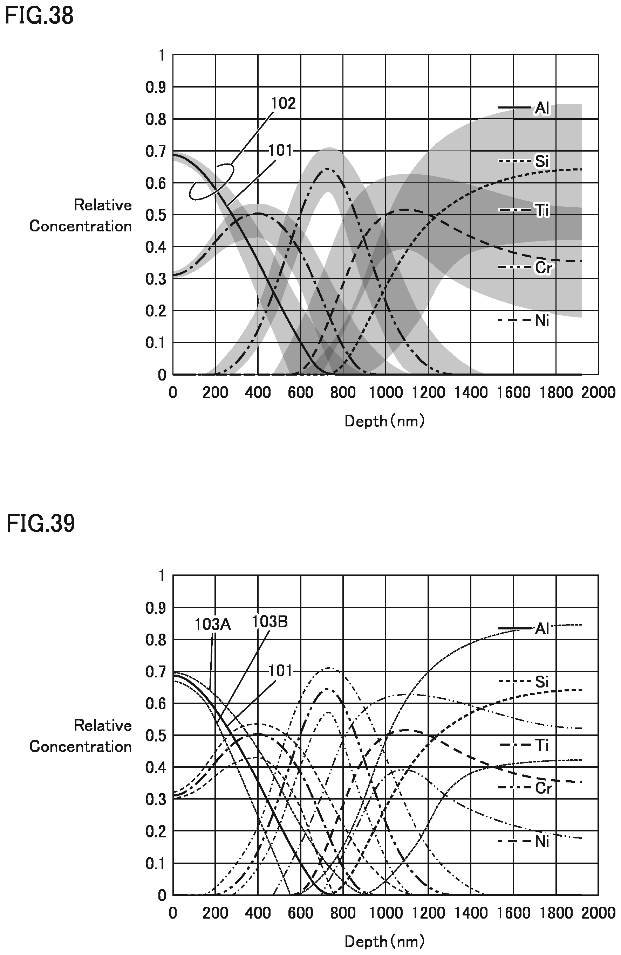

Fig. 38 is a diagram showing a first example of output of representation by the data analysis apparatus according to the present embodiment. In the first example, representation of the average value and the confidence interval of the estimated values of the relative concentration is representation in a form of a graph. Therefore, accuracy of the result of estimation can be shown in a form readily graspable to the analyst. The graph includes the abscissa (first axis) representing the depth from the surface of the sample, the ordinate (second axis) representing the relative concentration of the chemical species, a curve (first graphic) representing the average value of the estimated values of the relative concentration with respect to the depth, and an area (second graphic) representing the confidence interval of the relative concentration with respect to the depth.

In the example in Fig. 38, the sample to be analyzed is the sample obtained by layering aluminum (Al), titanium (Ti), chromium (Cr), and nickel (Ni) on the silicon (Si) substrate in the order of proximity to the surface of the sample. In Fig. 15, a curve 101 and an area 102 represent the average value and the confidence interval of the estimated values of the relative concentration at each depth of aluminum (Al), respectively. A width in a direction along the ordinate of area 102 corresponds to a width of the confidence interval. For other chemical species as well, similarly, the curve (first graphic) representing variation of average value $\mu$, with respect to the depth and the area (second graphic) representing variation of the confidence interval with respect to the depth are shown. The analyst (for example, the user of the data analysis apparatus) can readily grasp, for a certain chemical species, accuracy in estimation of the relative concentration (whether or not the result of estimation by Bayesian MSM can be concluded as being "confident") from magnitude of the width of the area representing the confidence interval. Therefore, according to the example in Fig. 38, accuracy of the result of estimation can be shown to facilitate grasp of accuracy of the result of estimation by the analyst.

In the example in Fig. 38, a type of the curve representing the average value of the estimated values of the relative concentration is different for each chemical species. Representation of the curve, however, is not limited as such. Colors different for each chemical species may be provided to the curve and the area. The curve and the area can thus be shown to facilitate distinction by the user, of the curve and the area corresponding to each chemical species.

Fig. 39 is a diagram showing a second example of output of representation by the data analysis apparatus according to the present embodiment. In the example shown in Fig. 39, the confidence interval of the estimated values of the relative concentration for each depth and for each chemical species is expressed with curves. Exemplary representation shown in Fig. 39 is different in this regard from the example shown in Fig. 38.

For example, curve 101 represents the average value of the estimated values of the relative concentration for each depth in an example where the chemical species is aluminum (Al). A curve 103A and a curve 103B represent an upper limit and a lower limit, respectively, of the confidence interval of the estimated values of the relative concentration for each depth in the example where the chemical species is aluminum (Al). Since an area that lies between the two curves corresponds to the confidence interval, a width in the direction along the ordinate of that area corresponds to the width of the confidence interval. The analyst (for example, the user of the data analysis apparatus) can thus readily grasp, for a certain chemical species, accuracy of estimation of the relative concentration (whether or not the result of estimation by Bayesian MSM can be concluded as being "confident") from magnitude of the width of the area representing the confidence interval.

Similarly to exemplary representation shown in Fig. 38, colors different for each chemical species may be provided to the curve representing each of the average value and the upper limit value and the lower limit value of the confidence interval of the estimated values of the relative concentration. In addition, as shown in Fig. 39, a type of the curve representing each of the average value and the upper limit value and the lower limit value of the confidence interval of the estimated values of the relative concentration may be different for each chemical species.

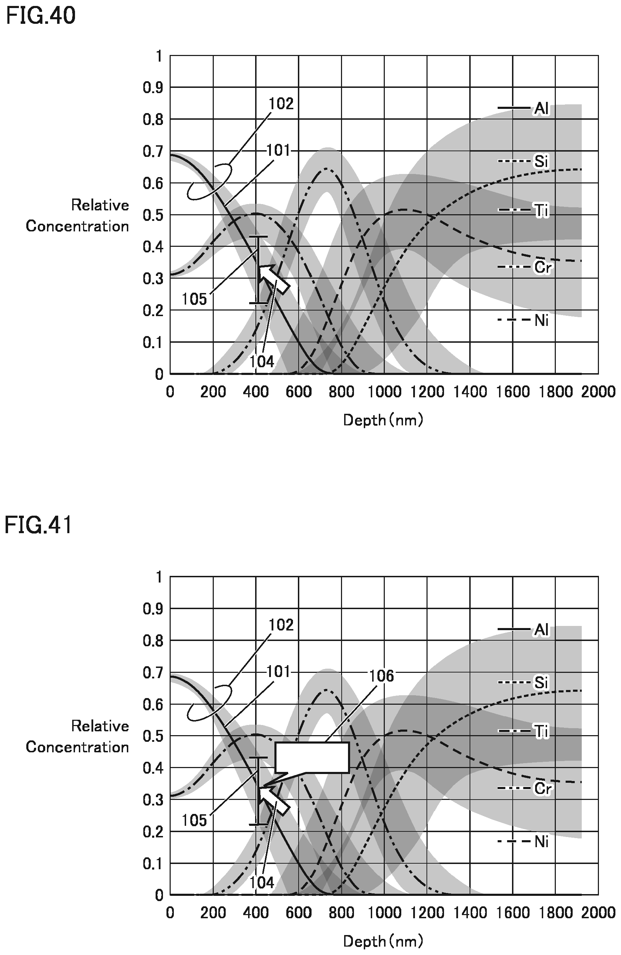

Fig. 40 is a diagram showing a third example of output of representation by the data analysis apparatus according to the present embodiment. Exemplary representation shown in Fig. 40 is basically the same as exemplary representation shown in Fig. 38. The user moves a cursor 104 of mouse 42 (see Fig. 2) over the curve (for example, curve 101) in the graph on the screen of display 43 (see Fig. 2). An error bar 105 is thus shown at the position on the curve indicated by cursor 104. Exemplary representation shown in Fig. 40 is different in this regard from exemplary representation shown in Fig. 38.

A length of error bar 105 corresponds to the width of the confidence interval of the estimated values of the relative concentration corresponding to the position on the curve indicated by cursor 104. According to the example shown in Fig. 40, the length of the error bar expresses the width of the confidence interval, and hence accuracy of the result of estimation can be shown such that the analyst can readily grasp accuracy of the result of estimation. Error bar 105 indicating the width of the confidence interval of the estimated values may be shown at the position on the curve indicated by cursor 104 similarly in exemplary representation shown in Fig. 39 when cursor 104 is moved over the curve representing the average value of the estimated values.

Fig. 41 is a diagram showing a fourth example of output of representation by the data analysis apparatus according to the present embodiment. Exemplary representation shown in Fig. 41 shows a text box 106 in addition to the representation shown in Fig. 40. Information shown in text box 106 includes, for example, information (1) to information (5) below. It is not necessary to show all of information (3) to information (6) in the text box but at least one of (3) to (6) may be shown in the text box.

(1) the chemical species corresponding to the curve indicated by cursor 104
(2) the depth corresponding to the position on the curve indicated by cursor 104
(3) average value $\mu$ of the estimated values of the relative concentration corresponding to the position on the curve indicated by cursor 104
(4) variance $\sigma$ of the estimated values of the relative concentration corresponding to the position on the curve indicated by cursor 104
(5) the upper limit value of the confidence interval (for example, $\mu \pm 3\sigma$) corresponding to error bar 105
(6) the lower limit value of the confidence interval (for example, $\mu \pm 3\sigma$) corresponding to error bar 105

Representation of information in the text box is not limited to that applied only to exemplary representation shown in Fig. 41. Representation of the information in the text box is applicable to any of exemplary representations shown in Figs. 38 to 40. Representation of a numerical value facilitates grasp of the result of estimation by the analyst.

Alternatively, as shown in Figs. 23, 26, 31, and 35, the width of the confidence interval of the estimated values of the relative concentration may be expressed by superimposed curves.

In exemplary representation above, the average value of the estimated values of the relative concentration is expressed by a line and the confidence interval of the estimated values of the relative concentration is expressed by a face or a line. The graphic for expressing the average value of the estimated values of the relative concentration and the confidence interval of the estimated values of the relative concentration on the graph, however, is not limited to the line or the face, and it may be, for example, a point or a solid.

Furthermore, representation of the average value of the estimated values of the relative concentration and the confidence interval of the estimated values of the relative concentration may be representation other than the graph.

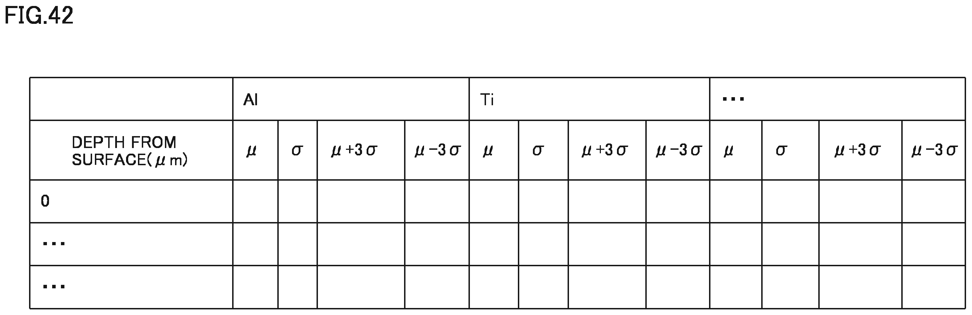

Fig. 42 is a diagram showing a fifth example of output of representation by the data analysis apparatus according to the present embodiment. In the example shown in Fig. 42, average value $\mu$, variance $\sigma$, the upper limit (for example, $\mu$ +3$\sigma$) of the confidence interval, and the lower limit (for example, $\mu$-3$\sigma$) of the confidence interval of the estimated values of the relative concentration for each depth and for each chemical species of the sample are outputted in a form of a table of figures. According to this example, as the average value and the confidence interval are shown with numerical values, the analyst can specifically grasp the average value and the confidence interval.

A table shown in Fig. 42 may be shown on the screen of the display or outputted from a printer. Representation in the form of the table of figures shown in Fig. 42 may be outputted alone or together with representation of the graph exemplified in Figs. 38 to 41. Furthermore, data included in the table shown in Fig. 42 may be outputted to a recording medium as data in a format (for example, a CSV format) that can be shown on the screen of the display.

An example of analysis by EDX is shown as one example of the embodiment in the present disclosure. The embodiment in the present disclosure, however, is not limited to that applied to analysis by EDX. For example, the embodiment in the present disclosure is applicable also to analysis by XPS. In the case of XPS, theoretical value d'$_{ij}$ of the response signal in the expression (1) is expressed by an expression (37) below.
[Math. 37]

$$d'_{ij} = \sum_{k=1}^{K} I_{ki}\left(\theta_j\right) \quad (37)$$

$I_{ki}(\theta_j)$ in the expression (37) represents a photoelectron signal in connection with chemical species i. $\theta_j$ represents an angle of extraction of the photoelectron signal from the sample. A level of extraction angle $\theta_j$ is expressed as J. Photoelectron signal $I_{ki}(\theta_j)$ is expressed by an expression (38) below.
[Math. 38]

$$I_{ki}\left(\theta_j\right) = c_{ik}\sigma_i t \prod_{l=1}^{k-1} exp\left(-\frac{t}{\lambda_{li}sin\theta_j}\right) \quad (38)$$

In the expression (38), $c_{ik}$ represents the relative concentration of chemical species i in the kth layer. The total of the relative concentrations of chemical species i is 1 ($\Sigma_i c_{ik}$ = 1). $\lambda_{li}$ represents an inelastic average free path of photoelectrons generated from chemical species i in an lth layer. $\sigma_i$ represents a relative ionization cross-section with respect to X-rays, of photoelectrons of chemical species i. The total power $\Pi$ of a signal at the time when relation of k = 1 is satisfied, that is, a signal at the outermost layer, is regarded as 1. Thickness t of the layer is assumed as being extremely smaller than $\lambda_{li}$ (t<<$\lambda_{li}$). Therefore, in the expression (38), attenuation of photoelectrons in the layer where they were generated is approximated by a linear function ($e^{-x} \sim$ 1-x).

By setting theoretical value d'$_{ij}$ of the response signal in the expression (1) in accordance with the expression (37) and the expression (38) as set forth above, the technique of Bayesian MSM described above is applicable also to analysis by XPS. Furthermore, by appropriately expressing theoretical value d'$_{ij}$ of the response signal in the expression (1), Bayesian MSM according to the embodiment of the present disclosure is applicable to every type of surface analysis, without being limited to EDX and XPS.

Bayesian estimation of the depth profile according to the second embodiment can similarly also be applied to another analysis, without being limited to application to analysis of EDX analysis data. The configuration of direct problem evaluator 61 should only be changed to a configuration in accordance with another analysis. More specifically, the expression (2) calculated by measurement theoretical value construction unit 61B should only be transformed to a form suitable for another analysis.

In the configuration of analysis unit 52 shown in Fig. 17, next parameter recommendation unit 62 recommends next parameter $\theta$ based on combination of previously recommended parameter $\theta$ and output y from direct problem evaluator 61. In spite of the fact that next parameter recommendation unit 62 handles the direct problem as a black box, next parameter recommendation unit 62 can recommend next parameter $\theta$. Therefore, estimation of the depth profile according to the second embodiment is applicable to every type of surface analysis, without being limited to EDX analysis and XPS analysis.

<7. Additional Aspects>

The present disclosure includes embodiments shown below.

[Additional Aspect 1]

(1) A data analysis apparatus that analyzes a depth profile of a sample by using data of a response signal generated from the sample as a result of incidence of a probe, includes

an input unit that receives the data of the response signal, the data being obtained by a measurement apparatus that measures the response signal by varying a condition of incidence of the probe so as to evaluate different depth areas of the sample, and

an analysis unit that estimates a relative concentration for each depth from a surface of the sample and for each chemical species by analyzing the data of the response signal so as to calculate an average value and a confidence interval of estimated values of the relative concentration, and

the analysis unit calculates the average value and the confidence interval of the estimated values by processing an evaluation function in accordance with Bayesian estimation processing, the evaluation function being expressed by a sum of a first term and a second term, the first term expressing a sum of squared deviation between a theoretical value of the response signal when the sample is modeled to a multilayer structure composed of a plurality of layers and the data of the response signal, the second term expressing a degree of continuity at the depth of the relative concentration.

(2) In the data analysis apparatus described in (1), the Bayesian estimation processing includes a sampling algorithm with the relative concentration for each depth and for each chemical species being defined as a variable.

(3) In the data analysis apparatus described in (2), the sampling algorithm is an algorithm based on a Metropolis method.

(4) In the data analysis apparatus described in (1), the Bayesian estimation processing is processing in accordance with a variational inference method.

[Additional Aspect 2]

(1) A data analysis method of analyzing a depth profile of a sample by using data of a response signal generated from the sample as a result of incidence of a probe, includes

receiving, by a data analysis apparatus, the data of the response signal, the data being obtained by a measurement apparatus that measures the response signal by varying a condition of incidence of the probe so as to evaluate different depth areas of the sample,

estimating, by the data analysis apparatus, a relative concentration for each depth from a surface of the sample and for each chemical species by analyzing the data of the response signal so as to calculate an average value and a confidence interval of estimated values of the relative concentration, and

outputting, by the data analysis apparatus, representation of the average value and the confidence interval of the estimated values of the relative concentration,

the representation of the average value and the confidence interval is representation in a form of a graph, and the graph includes a first axis representing the depth, a second axis representing the relative concentration, a first graphic representing variation of the average value with respect to the depth, and a second graphic representing variation of the confidence interval with respect to the depth.

(2) In the data analysis method described in (1),

the first graphic is a curve, and

the second graphic includes an area superimposed on the curve.

(3) In the data analysis method described in (1),

the second graphic includes a first curve representing an upper limit of the confidence interval and a second curve representing a lower limit of the confidence interval.

(4) In the data analysis method described in any one of (1) to (3),

the second graphic includes an error bar, and
a length of the error bar corresponds to a width of the confidence interval of the estimated values at a designated position on the first graphic.

(5) In the data analysis method described in any one of (1) to (4),
the graph includes numerical representation of at least one of the average value, an upper limit value of the confidence interval, and a lower limit value of the confidence interval, at a designated position on the first graphic.

(6) In the data analysis method described in any one of (1) to (5),
the outputting the representation outputs the representation of the average value and the confidence interval in a form of a table of figures.

(7) In the data analysis method described in any one of (1) to (6),

the estimating a relative concentration so as to calculate an average value and a confidence interval includes calculating the average value and the confidence interval of the estimated values by processing an evaluation function in accordance with Bayesian estimation processing, and
the evaluation function is expressed by a sum of a first term and a second term, the first term expressing a sum of squared deviation between a theoretical value of the response signal when the sample is modeled to a multilayer structure composed of a plurality of layers and the data of the response signal, the second term expressing a degree of continuity at the depth of the relative concentration.

(8) In the data analysis method described in (7), the Bayesian estimation processing includes a sampling algorithm with the relative concentration for each depth and for each chemical species being defined as a variable.

(9) In the data analysis method described in (7), the Bayesian estimation processing is processing in accordance with a variational inference method.

(10) In the data analysis method described in any one of (1) to (9), the measurement apparatus is an energy dispersive X-ray spectrometer.

(11) In the data analysis method described in any one of (1) to (9), the measurement apparatus is an X-ray photoelectron spectrometer.

[Additional Aspect 3]

(1) A data analysis method of analyzing a depth profile of a sample by using data of a response signal generated from the sample as a result of incidence of a probe, includes

receiving, by a data analysis apparatus, the data of the response signal, the data being obtained by a measurement apparatus that measures the response signal by varying a condition of incidence of the probe so as to evaluate different depth areas of the sample, and
estimating, by the data analysis apparatus, a relative concentration for each depth from a surface of the sample and for each chemical species by analyzing the data of the response signal so as to calculate an average value and a confidence interval of estimated values of the relative concentration,
the estimating a relative concentration so as to calculate an average value and a confidence interval includes calculating the average value and the confidence interval of the estimated values by processing an evaluation function in accordance with Bayesian estimation processing, and
the evaluation function is expressed by a sum of a first term and a second term, the first term expressing a sum of squared deviation of a theoretical value of the response signal when the sample is modeled to a multilayer structure composed of a plurality of layers and the data of the response signal, the second term expressing a degree of continuity at the depth of the relative concentration.

(2) In the data analysis method described in (1),
the Bayesian estimation processing includes a sampling algorithm with the relative concentration for each depth and for each chemical species being defined as a variable.

(3) In the data analysis method described in (2),
the sampling algorithm is an algorithm based on a Metropolis method.

(4) In the data analysis method described in claim (1),
the Bayesian estimation processing is processing in accordance with a variational inference method.

[Additional Aspect 4]

(1) A data analysis method of analyzing a depth profile of a sample by using data of a response signal generated from the sample as a result of incidence of a probe, includes

receiving, by a data analysis apparatus, the data of the response signal, the data being obtained by a measurement apparatus that measures the response signal by varying a condition of incidence of the probe so as to evaluate different depth areas of the sample, and
estimating, by the data analysis apparatus, a relative concentration for each depth from a surface of the sample and for each chemical species by analyzing the data of the response signal so as to calculate an average value and a confidence interval of estimated values of the relative concentration, and
the estimating a relative concentration so as to calculate an average value and a confidence interval includes obtaining, in accordance with Bayesian estimation, a posterior distribution of a parameter included in a prescribed function that expresses a model of the sample in which a degree of freedom of the depth profile is restricted.

(2) In the data analysis method described in claim (1),

the model of the sample is a multilayer structure composed of a plurality of layers,
the prescribed function is a function that expresses that the depth profile has rise and fall at a boundary of each layer of the plurality of layers, and
the parameter includes

a composition of the sample,
a thickness of the each layer of the plurality of layers,
gentleness of the rise of the depth profile of the each layer of the plurality of layers, and
gentleness of the fall of the depth profile of the each layer of the plurality of layers.

(3) In the data analysis method described in (1) or (2),

the obtaining a posterior distribution of a parameter in accordance with Bayesian estimation includes calculating a sum of squared deviation of an actually measured value and a theoretical value by using a value of the parameter for a direct problem model,
obtaining a probability distribution of the parameter includes recommending a candidate value for the parameter to be used for calculation of the posterior distribution of the parameter, by using the calculated sum of squared deviation, and
calculation of the posterior distribution and recommendation of the candidate value for the parameter are alternately iterated.

(4) In the data analysis method described in claim (3),
the recommending a candidate value for the parameter includes

proposing the candidate value for the parameter using a prescribed probability distribution in accordance with a Markov chain Monte Carlo (MCMC) method, and
calculating an optimal initial value for the Markov chain Monte Carlo method, by using the calculated sum of squared deviation.

It should be understood that the embodiments disclosed herein are illustrative and non-restrictive in every respect. The scope of the present invention is defined by the terms of the claims rather than the embodiments above and is intended to include any modifications within the scope and meaning equivalent to the terms of the claims.

REFERENCE SIGNS LIST

10 analysis system; 20 measurement apparatus; 25 sample; 30 data analysis apparatus; 31 processor; 32 primary storage device; 33 secondary storage device; 34 external device interface; 35 input interface; 36 output interface; 37 communication interface; 38 bus; 41 keyboard; 42 mouse; 43 display; 44 network; 45 printer; 51 input unit; 52 analysis unit; 53 output unit; 54 storage; 61 direct problem evaluator; 61A profile construction unit; 61B measurement theoretical value construction unit; 61C sum-of-squared-deviation evaluator; 62 next parameter recommendation unit; 62A optimal solution determination unit; 62B MCMC implementation unit; 71 analysis program; 72 parameter; 101, 103A, 103B curve; 102 area; 104 cursor; 105 error bar; 106 text box; S11 to S13, S12A, S21 to S28, S26A to S26D step.

**Claims**

1. A data analysis apparatus that analyzes a depth profile of a sample by using data of a response signal generated from the sample as a result of incidence of a probe, the data analysis apparatus comprising:

   an input unit that receives the data of the response signal, the data being obtained by a measurement apparatus that measures the response signal by varying a condition of incidence of the probe so as to evaluate different depth areas of the sample;
   an analysis unit that estimates a relative concentration for each depth from a surface of the sample and for each chemical species by analyzing the data of the response signal so as to calculate an average value and a confidence interval of estimated values of the relative concentration; and
   an output unit that outputs representation of the average value and the confidence interval of the estimated values of the relative concentration.

2. The data analysis apparatus according to claim 1, wherein

   the representation of the average value and the confidence interval is representation in a form of a graph, and the graph includes a first axis representing the depth, a second axis representing the relative concentration, a first graphic representing variation of the average value with respect to the depth, and a second graphic representing variation of the confidence interval with respect to the depth.

3. The data analysis apparatus according to claim 2, wherein

   the first graphic is a curve, and
   the second graphic includes an area superimposed on the curve.

4. The data analysis apparatus according to claim 2, wherein
   the second graphic includes a first curve representing an upper limit of the confidence interval and a second curve representing a lower limit of the confidence interval.

5. The data analysis apparatus according to any one of claims 2 to 4, wherein

   the second graphic includes an error bar, and
   a length of the error bar corresponds to a width of the confidence interval of the estimated values at a designated position on the first graphic.

6. The data analysis apparatus according to any one of claims 2 to 5, wherein
   the graph includes numerical representation of at least one of the average value, an upper limit value of the confidence interval, and a lower limit value of the confidence interval, at a designated position on the first graphic.

7. The data analysis apparatus according to any one of claims 1 to 6, wherein
   the output unit outputs the representation of the average value and the confidence interval in a form of a table of figures.

8. The data analysis apparatus according to any one of claims 2 to 7, wherein

   the analysis unit calculates the average value and the confidence interval of the estimated values by processing an evaluation function in accordance with Bayesian estimation processing, and
   the evaluation function is expressed by a sum of a first term and a second term, the first term expressing a sum of squared deviation between a theoretical value of the response signal and the data of the response signal when the sample is modeled to a multilayer structure composed of a plurality of layers, the second term expressing a degree of continuity of the relative concentration at the depth.

9. The data analysis apparatus according to claim 8, wherein
   the Bayesian estimation processing includes a sampling algorithm with the relative concentration for each depth and for each chemical species being defined as a variable.

10. The data analysis apparatus according to claim 8, wherein
    the Bayesian estimation processing is processing in accordance with a variational inference method.

11. The data analysis apparatus according to any one of claims 2 to 7, wherein
    the analysis unit calculates the average value and the confidence interval of the estimated values of the relative concentration by obtaining, in accordance with Bayesian estimation, a posterior distribution of a parameter included in a prescribed function that expresses a model of the sample in which a degree of freedom of the depth profile is restricted.

12. The data analysis apparatus according to claim 11, wherein

    the model of the sample is a multilayer structure composed of a plurality of layers,
    the prescribed function is a function that expresses that the depth profile has rise and fall at a boundary of each layer of the plurality of layers, and
    the parameter includes

    a composition of the sample,
    a thickness of the each layer of the plurality of layers,
    gentleness of the rise of the depth profile of the each layer of the plurality of layers, and
    gentleness of the fall of the depth profile of the each layer of the plurality of layers.

13. The data analysis apparatus according to claim 12, wherein

    the analysis unit includes

    a direct problem evaluator that calculates a sum of squared deviation of an actually measured value and a theoretical value by using a value of the parameter as input to a direct problem model, and
    a next parameter recommendation unit that recommends to the direct problem evaluator, a candidate value for the parameter to be used for next calculation by the direct problem evaluator, by using the sum of squared deviation calculated by the direct problem evaluator, and

    calculation of the sum of squared deviation by the direct problem evaluator and recommendation of the candidate value for the parameter by the next parameter recommendation unit are alternately iterated.

14. The data analysis apparatus according to claim 13, wherein
    the next parameter recommendation unit includes

    an MCMC implementation unit that proposes the candidate value for the parameter using a prescribed probability distribution, in accordance with a Markov chain Monte Carlo method, and
    an optimal solution determination unit that calculates an initial value for the Markov chain Monte Carlo method performed by the MCMC implementation unit, by performing a prescribed optimization technique by using the sum of squared deviation calculated by the direct problem evaluator.

15. The data analysis apparatus according to any one of claims 1 to 14, wherein
    the measurement apparatus is an energy dispersive X-ray spectrometer.

16. The data analysis apparatus according to any one of claims 1 to 14, wherein
    the measurement apparatus is an X-ray photoelectron spectrometer.

17. A data analysis method of analyzing a depth profile of a sample by using data of a response signal generated from the sample as a result of incidence of a probe, the data analysis method comprising:

receiving, by a data analysis apparatus, the data of the response signal, the data being obtained by a measurement apparatus that measures the response signal by varying a condition of incidence of the probe so as to evaluate different depth areas of the sample;

estimating, by the data analysis apparatus, a relative concentration for each depth from a surface of the sample and for each chemical species by analyzing the data of the response signal so as to calculate an average value and a confidence interval of estimated values of the relative concentration; and

outputting, by the data analysis apparatus, representation of the average value and the confidence interval of the estimated values of the relative concentration.

**18.** A program causing a computer to perform:

obtaining data of a response signal, the data being obtained by a measurement apparatus that measures the response signal by varying a condition of incidence of a probe so as to evaluate different depth areas of a sample;

estimating a relative concentration for each depth from a surface of the sample and for each chemical species by analyzing the data of the response signal so as to calculate an average value and a confidence interval of estimated values of the relative concentration; and

outputting representation of the average value and the confidence interval of the estimated values of the relative concentration.

**19.** A recording medium having a program recorded thereon, the program causing a computer to perform:

obtaining data of a response signal, the data being obtained by a measurement apparatus that measures the response signal by varying a condition of incidence of a probe so as to evaluate different depth areas of a sample;

estimating a relative concentration for each depth from a surface of the sample and for each chemical species by analyzing the data of the response signal so as to calculate an average value and a confidence interval of estimated values of the relative concentration; and

outputting representation of the average value and the confidence interval of the estimated values of the relative concentration.

FIG.1

ANALYSIS SYSTEM 10

MEASUREMENT APPARATUS 20

MEASUREMENT DATA → DATA ANALYSIS APPARATUS 30

PROBE

RESPONSE SIGNAL

SAMPLE 25

FIG.2

30

PROCESSOR 31

PRIMARY STORAGE DEVICE 32

SECONDARY STORAGE DEVICE 33

EXTERNAL DEVICE INTERFACE 34

38

INPUT INTERFACE 35

OUTPUT INTERFACE 36

COMMUNICATION INTERFACE 37

KEYBOARD 41

MOUSE 42

DISPLAY 43

44

PRINTER 45

FIG.3

MEASUREMENT DATA

EP 4 764 478 A1

FIG.4

FIG.5

FIG.6

FIG.7

```
        ┌─────────────┐
        │   START     │
        └─────────────┘
               │
               ▼                    ⌒S11
   ┌──────────────────────────────┐
   │   OBTAIN MEASUREMENT DATA     │
   └──────────────────────────────┘
               │
               ▼                    ⌒S12
   ┌──────────────────────────────┐
   │ PERFORM BAYESIAN MSM ANALYSIS BY │
   │ SAMPLING METHOD, TO CALCULATE    │
   │ AVERAGE VALUE μ AND STANDARD     │
   │ DEVIATION σ OF ESTIMATED VALUES OF│
   │ EACH cik                         │
   └──────────────────────────────┘
               │
               ▼                    ⌒S13
   ┌──────────────────────────────┐
   │ OUTPUT REPRESENTATION OF AVERAGE │
   │ VALUE AND CONFIDENCE INTERVAL OF │
   │ ESTIMATED VALUES OF RELATIVE     │
   │ CONCENTRATION FOR EACH DEPTH AND │
   │ FOR EACH CHEMICAL SPECIES        │
   └──────────────────────────────┘
               │
               ▼
        ┌─────────────┐
        │    END      │
        └─────────────┘
```

FIG.8

```
        ┌─────────────┐
        │   START     │
        └─────────────┘
               │
               ▼                    ⌒S11
   ┌──────────────────────────────┐
   │   OBTAIN MEASUREMENT DATA     │
   └──────────────────────────────┘
               │
               ▼                    ⌒S12A
   ┌──────────────────────────────┐
   │ PERFORM BAYESIAN MSM ANALYSIS BY │
   │ VARIATIONAL INFERENCE, TO CALCULATE│
   │ AVERAGE VALUE μ AND STANDARD     │
   │ DEVIATION σ OF ESTIMATED VALUES OF│
   │ EACH cik                         │
   └──────────────────────────────┘
               │
               ▼                    ⌒S13
   ┌──────────────────────────────┐
   │ OUTPUT REPRESENTATION OF AVERAGE │
   │ VALUE AND CONFIDENCE INTERVAL OF │
   │ ESTIMATED VALUES OF RELATIVE     │
   │ CONCENTRATION FOR EACH DEPTH AND │
   │ FOR EACH CHEMICAL SPECIES        │
   └──────────────────────────────┘
               │
               ▼
        ┌─────────────┐
        │    END      │
        └─────────────┘
```

## FIG.9

S12

```
        ┌──────────┐
        │  START   │
        └────┬─────┘
             │              S21
    ┌────────▼──────────────────┐
    │ SET INITIAL VALUE OF RELATIVE │
    │ CONCENTRATION             │
    └────────┬──────────────────┘
             │              S22
    ┌────────▼──────────────────┐
    │ CONVERT INITIAL VALUE TO DUMMY │
    │ VARIABLE $b_{ik}$          │
    └────────┬──────────────────┘
             │              S23
    ┌────────▼──────────────────┐
    │ SET PROPOSAL DISTRIBUTION  │
    └────────┬──────────────────┘
             │              S24
    ┌────────▼──────────────────┐
    │ GENERATE ONE $b_{n+1}$ FROM nth $b_n$ BY │
    │ USING PROPOSAL DISTRIBUTION AND │
    │ CONVERT $b_{n+1}$ TO $c_{n+1}$ │
    └────────┬──────────────────┘
             │              S25
    ┌────────▼──────────────────┐
    │ CALCULATE DIFFERENCE OF LOGARITHM │
    │ OF TRUE POSTERIOR DISTRIBUTION │
    └────────┬──────────────────┘
             │              S26
```

IS DIFFERENCE OF LOGARITHM OF TRUE POSTERIOR DISTRIBUTION EQUAL TO OR LARGER THAN 0? — SMALLER THAN 0

EQUAL TO OR LARGER THAN 0

S26B GENERATE UNIFORM RANDOM NUMBER $r$ THAT TAKES VALUE FROM 0 TO 1

EQUAL TO OR LARGER THAN $\log r$

S26C IS CALCULATED VALUE EQUAL TO OR LARGER THAN $\log r$?

SMALLER THAN $\log r$

S26A ADOPT $c_{n+1}$

S26D NOT ADOPT $c_{n+1}$

S27 HAS THE DESIGNATED NUMBER OF TIMES BEEN REACHED? — NO

YES

S28 CALCULATE AVERAGE VALUE $\mu$ AND STANDARD DEVIATION $\sigma$ OF ESTIMATED VALUES (EACH $c_{ik}$) OF RELATIVE CONCENTRATION FOR EACH DEPTH AND FOR EACH CHEMICAL SPECIES

```
        ┌──────────┐
        │   END    │
        └──────────┘
```

FIG.10

FIG.11

FIG.12

FIG.13

## FIG.14

## FIG.15

$$\text{LAYER 1}: \theta_{111}, \cdots, \theta_{115}, \cdots, \theta_{1l1}, \cdots, \theta_{1l5} \qquad z_{1l}\text{-}z_{1u}$$

$$\text{LAYER 2}: \theta_{211}, \cdots, \theta_{215}, \cdots, \theta_{2l1}, \cdots, \theta_{2l5} \qquad z_{2l}\text{-}z_{2u}$$

$$\vdots$$

$$\text{LAYER M}: \theta_{M11}, \cdots, \theta_{M15}, \cdots, \theta_{Ml1}, \cdots, \theta_{Ml5} \qquad z_{Ml}\text{-}z_{Mu}$$

FIG.16

RELATIVE
CONCENTRATION

$F(\theta_{111},\cdots,\theta_{115}, \cdots,\theta_{1I1},\cdots,\theta_{1I5})$

$F(\theta_{211},\cdots,\theta_{215}, \cdots,\theta_{2I1},\cdots,\theta_{2I5})$

$F(\theta_{M11},\cdots,\theta_{M15}, \cdots,\theta_{MI1},\cdots,\theta_{MI5})$

LAYER 1

LAYER 2

...

LAYER M

DEPTH

EP 4 764 478 A1

FIG.17

# FIG.18

**61 — DIRECT PROBLEM EVALUATOR**

**61A**

$\theta \Rightarrow c$ : CONSTRUCTION OF PROFILE

$$A\left[\frac{1}{1+e^{-\frac{z-z_u}{\sigma_u}}} + \frac{1}{1+e^{\frac{z-z_l}{\sigma_l}}} - 1\right]$$

**61B**

$c \Rightarrow d'$ : CONSTRUCTION OF MEASUREMENT THEORETICAL VALUE

$$d' = Sc$$

**61C**

$d' \Rightarrow y$ : CONSTRUCTION OF DEVIATION FROM ACTUALLY MEASURED VALUE

$$y = \frac{1}{2}\sum_{i=1}^{I}\sum_{k=1}^{J}\frac{(d_{ij}-d'_{ij})^2}{\sigma^2_{EDX_{ij}}}$$

INPUT AT FIRST TIME $\sigma, d$

INPUT OUTPUT $\theta$ $\theta$

**62 — NEXT PARAMETER RECOMMENDATION UNIT**

**62A — OPTIMAL SOLUTION DETERMINATION UNIT**

$\theta_2$ DONE DONE DONE NEXT $\theta$ DONE DONE $\theta_1$

**62B — MCMC**

$\theta_2$ PROPOSAL DISTRIBUTION PREVIOUS NEXT $\theta$ $\theta_1$

OUTPUT INPUT $y$ $y$

EP 4 764 478 A1

FIG.19

(A)

Ni
181 nm
InP
200 nm

(B)

SiN
262 nm
InP
200 nm

FIG.20

(A)Ni/InP

(B)SiN/InP

FIG.21

$$\begin{array}{|c|} \hline \text{LAYER 1: Ni} \\ \hline \text{LAYER 2: In}_{1-x}\text{P}_x \\ \hline \end{array} \quad d_{Ni}$$

FIG.22

(A)THICKNESS OF Ni LAYER

(B)In COMPOSITION IN InP LAYER

FIG.23

FIG.24

# FIG.25

(A) N COMPOSITION IN SiN LAYER

(B) THICKNESS OF SiN LAYER

(C) In COMPOSITION IN InP LAYER

EP 4 764 478 A1

FIG.26

FIG.27

FIG.28

FIG.29

| LAYER 1: PFA($C_xF_{1-x}$) |
|---|
| LAYER 2: Cu |

$d_{PFA}$

EP 4 764 478 A1

FIG.30

(A)C COMPOSITION IN PFA LAYER

(B)THICKNESS OF PFA LAYER

59

FIG.31

FIG.32

FIG.33

EP 4 764 478 A1

FIG.34

(A) THICKNESS OF Al LAYER

Thickness (nm)

$\mu$=354 nm  $\sigma$=1.02 nm

MCMC iteration

(B) THICKNESS OF Ti LAYER

Thickness (nm)

$\mu$=286 nm  $\sigma$=1.25 nm

MCMC iteration

(C) THICKNESS OF Cr LAYER

Thickness (nm)

$\mu$=238 nm  $\sigma$=1.56 nm

MCMC iteration

(D) THICKNESS OF Ni LAYER

Thickness (nm)

$\mu$=254 nm  $\sigma$=2.88 nm

MCMC iteration

EP 4 764 478 A1

FIG.35

FIG.36

(A) THICKNESS OF Al LAYER

μ=347 nm  σ=1.89 nm

(B) THICKNESS OF Ti LAYER

μ=277 nm  σ=2.32 nm

(C) THICKNESS OF Cr LAYER

μ=234 nm  σ=2.39 nm

(D) THICKNESS OF Ni LAYER

μ=243 nm  σ=3.52 nm

## FIG.37

(A)"EXPECTATION" OF THICKNESS

(B)"CONFIDENCE INTERVAL" OF THICKNESS

FIG.38

FIG.39

FIG.40

FIG.41

FIG.42

| | Al | | | | Ti | | | | ... | | | |
|---|---|---|---|---|---|---|---|---|---|---|---|---|
| DEPTH FROM SURFACE($\mu$m) | $\mu$ | $\sigma$ | $\mu+3\sigma$ | $\mu-3\sigma$ | $\mu$ | $\sigma$ | $\mu+3\sigma$ | $\mu-3\sigma$ | $\mu$ | $\sigma$ | $\mu+3\sigma$ | $\mu-3\sigma$ |
| 0 | | | | | | | | | | | | |
| ... | | | | | | | | | | | | |
| ... | | | | | | | | | | | | |

## INTERNATIONAL SEARCH REPORT

| | International application No. |
|---|---|
| | **PCT/JP2024/010096** |

| A. | CLASSIFICATION OF SUBJECT MATTER |
|---|---|

*G01N 23/223*(2006.01)i; *G01N 23/2273*(2018.01)i
FI:   G01N23/223; G01N23/2273

According to International Patent Classification (IPC) or to both national classification and IPC

| B. | FIELDS SEARCHED |
|---|---|

Minimum documentation searched (classification system followed by classification symbols)

G01N

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2022/230112 A1 (SUMITOMO ELECTRIC INDUSTRIES, LTD.) 03 November 2022 (2022-11-03)<br>paragraphs [0015]-[0016], [0046]-[0106], [0126], fig. 1-5, 9 | 1-19 |
| Y | JP 2022-122022 A (CANON MEDICAL SYSTEMS CORP.) 22 August 2022 (2022-08-22)<br>paragraph [0051] | 1-19 |
| Y | JP 2001-245900 A (ARKRAY, INC.) 11 September 2001 (2001-09-11)<br>claim 1, fig. 1 | 1-19 |
| Y | JP 2014-51713 A (TOKYO INSTITUTE OF TECHNOLOGY) 20 March 2014 (2014-03-20)<br>claim 2 | 8-14 |
| Y | CN 107064480 A (ZHUZHOU QIANJIN PHARMACEUTICAL CO., LTD.) 18 August 2017 (2017-08-18)<br>paragraph [0030] | 8-14 |

☑ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/010096**

**C.    DOCUMENTS CONSIDERED TO BE RELEVANT**

| Category* | Citation of document, with indication, where appropriate, of the relevant passages | Relevant to claim No. |
|---|---|---|
| A | JP 2017-504805 A (GE HEALTHCARE BIO-SCIENCES AB) 09 February 2017 (2017-02-09)<br>entire text, all drawings | 1-19 |

Form PCT/ISA/210 (second sheet) (July 2022)

**INTERNATIONAL SEARCH REPORT**
Information on patent family members

International application No.

**PCT/JP2024/010096**

| Patent document cited in search report | | | Publication date (day/month/year) | Patent family member(s) | | | Publication date (day/month/year) |
|---|---|---|---|---|---|---|---|
| WO | 2022/230112 | A1 | 03 November 2022 | CN | 116917723 | A | |
| JP | 2022-122022 | A | 22 August 2022 | US | 2023/0384331 | A1 | |
| | | | | paragraph [0057] | | | |
| | | | | WO | 2022/172788 | A1 | |
| | | | | CN | 116724231 | A | |
| JP | 2001-245900 | A | 11 September 2001 | WO | 2001/064100 | A1 | |
| | | | | claim 1, fig. 1 | | | |
| JP | 2014-51713 | A | 20 March 2014 | (Family: none) | | | |
| CN | 107064480 | A | 18 August 2017 | (Family: none) | | | |
| JP | 2017-504805 | A | 09 February 2017 | US | 2017/0038379 | A1 | |
| | | | | WO | 2015/114056 | A1 | |
| | | | | EP | 3100048 | A1 | |
| | | | | CN | 106471372 | A | |

Form PCT/ISA/210 (patent family annex) (July 2022)

## REFERENCES CITED IN THE DESCRIPTION

**Patent documents cited in the description**

- JP 2023132504 A

- WO 2022230112 A

**Non-patent literature cited in the description**

- **YOSHIKI YONAMOTO**. Application of Maximum Entropy Method to Semiconductor Engineering. *Entropy*, 2013, vol. 15, 1663-1689